# EUROPEAN PATENT APPLICATION

(11) **EP 4 254 141 A1**
(43) Date of publication of application: **04.10.2023**
(21) Application number: 22198772.0
(22) Date of filing: 29.09.2022
(51) Int. Cl.: G06F 3/01, G06F 3/048, G06F 3/12

(54) **INFORMATION PROCESSING DEVICE, INFORMATION PROCESSING METHOD, AND PROGRAM**

(30) Priority: 28.03.2022 JP 2022052530
(71) Applicant: Fujifilm Business Innovation Corp., Tokyo 107-0052 (JP)
(72) Inventor: KAJIYAMA, Kohei, Yokohama (JP); AWATSU, Yusaku, Yokohama (JP)
(74) Representative: Meissner Bolte Partnerschaft mbB

(57) **Abstract**

An information processing device includes a processor configured to: acquire image data; detect a position on a predetermined stage of each of plural real objects placed on the stage, the plural real objects being candidates onto which the image data is to be projected; receive a selection of a real object as a projection target from among the plural real objects according to content of an operation performed by a user on the plural real objects and the position of each of the plural real objects on the stage; and cause the image data to be printed after projecting the image data onto the selected real object according to the position of the selected real object on the stage.

## Description

### Background

### (i) Technical Field

The present disclosure relates to an information processing device, an information processing method, and a program.

### (ii) Related Art

For example, Japanese Unexamined Patent Application Publication No. 2014-211769 describes an information processing device capable of editing a candidate image to be placed on the surface of an object, such as printed material to be affixed to the object. The information processing device includes a detecting means for detecting an object existing in a prescribed space, an acquiring means for acquiring shape information about the object detected by the detecting means, a projection controlling means for projecting a candidate image to be placed on the surface on the object onto the object detected by the detecting means, and a setting means for setting print settings information for causing a prescribed printer to print the candidate image.

Also, Japanese Patent No. 6911870 describes a display control device capable of executing an operation corresponding to a gesture with consideration for the usage situation and intention of a user. The display control device includes a determination unit that determines the content of a gesture from an operation performed on a display surface and an effect specifying unit that designates an effect setting the arrangement direction of display objects displayed on the display surface, the effect corresponding to the gesture determined by the determination unit, and also designates the display object(s) to be targeted by the effect. The effect specifying unit causes the display object(s) to be displayed on the basis of the placement position of a physical object placed on the display surface in the case where the operation has a prescribed positional relationship with the physical object, and causes the display object(s) to be displayed on top of the physical object in the case where the operation is an operation of drawing a line along the physical object.

### Summary

Incidentally, in cases where it is desirable to print an image to be inserted into or applied onto a desired real object, it may be desirable to print the image at a size matching the size of the real object.

There is a technology for projecting a single piece of image data onto a single real object and adjusting properties such as the size of the image data. However, in the case where there are multiple real objects onto which image data is to be projected, no consideration is given regarding how a desired real object is to be selected.

Accordingly, it is an object of the present disclosure to provide an information processing device, an information processing method, and an information processing program that allow a desired real object to be selected in the case where image data is projected onto a desired real object and printed after confirming properties such as the size of the image data, even if there are multiple real objects onto which image data is to be projected.

According to a first aspect of the present disclosure, there is provided an information processing device including a processor configured to: acquire image data; detect a position on a predetermined stage of each of a plurality of real objects placed on the stage, the plurality of real objects being candidates onto which the image data is to be projected; receive a selection of a real object as a projection target from among the plurality of real objects according to content of an operation performed by a user on the plurality of real objects and the position of each of the plurality of real objects on the stage; and cause the image data to be printed after projecting the image data onto the selected real object according to the position of the selected real object on the stage.

According to a second aspect of the present disclosure, there is provided an information processing device in which, in the information processing device according to the first aspect, the processor is configured to detect a size of each of the plurality of real objects, and if the image data is being projected onto a first real object among the plurality of real objects and the selection of a second real object different from the first real object is received according to a user operation, the processor is configured to cause the image data to be projected onto the second real object such that a size of the image data is adjusted to match the size of the second real object.

According to a third aspect of the present disclosure, there is provided an information processing device in which, in the information processing device according to the first aspect, in a case where previously edited image data similar to the image data exists and a real object similar to a real object previously associated with the edited image data exists among the plurality of real objects, the processor is configured to cause at least one of the image data or the edited image data to be projected onto the similar real object among the plurality of real objects.

According to a fourth aspect of the present disclosure, there is provided an information processing device in which, in the information processing device according to the third aspect, the processor is configured to detect a shape of each of the plurality of real objects, and the processor is configured to determine, on a basis of a result of the shape detection, whether a real object having a shape similar to the real object previously associated with the edited image data exists among the plurality of real objects.

According to a fifth aspect of the present disclosure, there is provided an information processing device in which, in the information processing device according to the third or fourth aspect, if a plurality of the edited image data exists, the processor is configured to cause the plurality of edited image data to be projected together with the image data or instead of the image data.

According to a sixth aspect of the present disclosure, there is provided an information processing device in which, in the information processing device according to the first aspect, the processor is configured to group and handle the plurality of real objects as a single projection target according to a user operation, and the processor is configured to cause the image data to be projected onto the single projection target obtained by the grouping.

According to a seventh aspect of the present disclosure, there is provided an information processing device in which, in the information processing device according to the first aspect, if a first real object among the plurality of real objects is moved or rotated while the image data is being projected onto the first real object, the processor is configured to move or rotate the image data to track the first real object.

According to an eighth aspect of the present disclosure, there is provided an information processing device in which, in the information processing device according to the seventh aspect, the processor is configured to disable the tracking if the user performs a predetermined operation.

According to a ninth aspect of the present disclosure, there is provided an information processing device in which, in the information processing device according to the eighth aspect, the processor is configured to cause a background color projected onto the stage when the tracking is enabled to be different from a background color projected onto the stage when the tracking is disabled.

According to a 10th aspect of the present disclosure, there is provided an information processing device in which, in the information processing device according to any one of the first to ninth aspects, the processor is configured to cause an edited image list, that is, a list of edited image data obtained in the past, to be projected onto the stage, and the processor is configured to treat edited image data selected from the edited image list as image data to be projected.

According to an 11th aspect of the present disclosure, there is provided an information processing device in which, in the information processing device according to any one of the first to ninth aspects, the processor is configured to: cause an image list, that is, a list of image data, to be projected onto a region other than a region where the plurality of real objects are placed on the stage; and cause image data included in the image list to be projected onto the region where the plurality of real objects are placed on the stage.

According to a 12th aspect of the present disclosure, there is provided an information processing device in which, in the information processing device according to the 11th aspect, in a case where image data is selected from the image list, the processor is configured to change the appearance of the image data corresponding to the selected image data among the image data being projected in the region where the plurality of real objects are placed on the stage.

According to a 13th aspect of the present disclosure, there is provided an information processing device in which, in the information processing device according to the 12th aspect, in a case where a plurality of image data is selected from the image list, the processor is configured to group the plurality of image data together as a single piece of projected image data.

According to a 14th aspect of the present disclosure, there is provided an information processing method including: acquiring image data; detecting a position on a predetermined stage of each of a plurality of real objects placed on the stage, the plurality of real objects being candidates onto which the image data is to be projected; receiving a selection of a real object as a projection target from among the plurality of real objects according to content of an operation performed by a user on the plurality of real objects and the position of each of the plurality of real objects on the stage; and causing the image data to be printed after projecting the image data onto the selected real object according to the position of the selected real object on the stage.

According to a 15th aspect of the present disclosure, there is provided an information processing program causing a computer to execute a process including: acquiring image data; detecting a position on a predetermined stage of each of a plurality of real objects placed on the stage, the plurality of real objects being candidates onto which the image data is to be projected; receiving a selection of a real object as a projection target from among the plurality of real objects according to content of an operation performed by a user on the plurality of real objects and the position of each of the plurality of real objects on the stage; and causing the image data to be printed after projecting the image data onto the selected real object according to the position of the selected real object on the stage.

The first, 14th, and 15th aspects have the effect of enabling a desired real object to be selected in the case where image data is projected onto a desired real object and printed after confirming properties such as the size of the image data, even if there are multiple real objects onto which image data is to be projected.

The second aspect has the effect of reducing the workload for resizing image data compared to the case where image data is resized manually.

The third aspect has the effect of reducing the workload for selecting a real object compared to the case where the real object to be treated as a projection target is selected manually.

The fourth aspect has the effect of determining whether a real object having a shape similar to a real object previously associated with edited image data similar to image data exists among a plurality of real objects.

The fifth aspect has the effect of projecting a plurality of edited image data similar to image data onto a real object to be treated as the projection target.

The sixth aspect has the effect of projecting image data onto a single projection target obtained by grouping a plurality of real objects.

The seventh aspect has the effect of causing projected image data to track a real object on a stage in the case where the real object is moved and adjusted without moving the image data.

The eighth aspect has the effect of disabling tracking when it is not desirable for image data to track a real object.

The ninth aspect has the effect of enabling the user to know at a glance whether tracking is in the enabled state or the disabled state.

The 10th aspect has the effect of enabling desired, edited image data to be selected and projected from a list of edited image data.

The 11th aspect has the effect of projecting an image list while also projecting image data included in the image list onto a stage on which a plurality of real objects are placed.

The 12th aspect has the effect of enabling the user to know at a glance the corresponding image data being projected when image data is selected from an image list.

The 13th aspect has the effect of grouping a plurality of image data selected from an image list.

### Brief Description of the Drawings

Exemplary embodiments of the present disclosure will be described in detail based on the following figures, wherein:
Fig. 1 is a diagram illustrating an example of the external appearance of an information processing device according to a first exemplary embodiment;
Figs. 2A to 2C are diagrams illustrating examples of real objects according to an exemplary embodiment;
Fig. 3 is a diagram accompanying a description of a use case according to an exemplary embodiment;
Fig. 4 is a diagram accompanying a description of another use case according to an exemplary embodiment;
Fig. 5 is a diagram accompanying a description of yet another use case according to an exemplary embodiment;
Fig. 6 is a block diagram illustrating an example of an electrical configuration of the information processing device according to the first exemplary embodiment;
Fig. 7 is a block diagram illustrating an example of a functional configuration of the information processing device according to the first exemplary embodiment;
Fig. 8 is a diagram accompanying a description of an image projection and printing process by an information processing device according to an exemplary embodiment;
Figs. 9A to 9D are diagrams accompanying a description of gesture operations according to an exemplary embodiment;
Figs. 10A to 10D are diagrams accompanying a description of other gesture operations according to an exemplary embodiment;
Fig. 11 is a flowchart illustrating an example of the flow of a process by an information processing program according to the first exemplary embodiment;
Fig. 12 is a diagram illustrating an example of multiple real objects placed on a stage according to an exemplary embodiment;
Fig. 13 is a diagram illustrating an example of image data projected onto a stage according to an exemplary embodiment;
Fig. 14 is a diagram accompanying a description of a gesture operation performed by a user's hand according to an exemplary embodiment;
Fig. 15 is a diagram accompanying a description of another gesture operation performed by a user's hand according to an exemplary embodiment;
Fig. 16 is a diagram accompanying a description of yet another gesture operation performed by a user's hand according to an exemplary embodiment;
Fig. 17 is a diagram accompanying a description of a button operation performed by a user's hand according to an exemplary embodiment;
Fig. 18 is a diagram accompanying a description of a button operation performed by a user's hand according to an exemplary embodiment;
Fig. 19 is a diagram accompanying a description of a button operation performed by a user's hand according to an exemplary embodiment;
Fig. 20 is a diagram accompanying a description of a button operation performed by a user's hand according to an exemplary embodiment;
Fig. 21 is a diagram accompanying a description of a process for automatically resizing image data according to a second exemplary embodiment;
Fig. 22 is a flowchart illustrating an example of the flow of an automatic selection process by an information processing program according to a third exemplary embodiment;
Fig. 23A is a diagram illustrating an example of image data projected onto a similar real object, and Fig. 23B is a diagram illustrating an example of image data projected onto a default position;
Fig. 24 is a diagram illustrating an example of multiple pieces of edited image data projected together with image data;
Fig. 25 is a diagram accompanying a description of a process of grouping multiple real objects according to a fourth exemplary embodiment;
Fig. 26 is a diagram illustrating an example of image data projected onto multiple grouped real objects;
Fig. 27 is a diagram accompanying a description of a process for automatic tracking by image data according to a fifth exemplary embodiment;
Fig. 28 is a diagram accompanying a description of another process for automatic tracking by image data according to the fifth exemplary embodiment;
Fig. 29 is a diagram accompanying a description of a process for disabling the automatic tracking by image data according to the fifth exemplary embodiment;
Figs. 30A and 30B are diagrams accompanying a description of an edited image list screen according to a sixth exemplary embodiment;
Figs. 31A and 31B are diagrams accompanying a description of a projected image selection screen according to a seventh exemplary embodiment;
Figs. 32A and 32B are diagrams accompanying a description of a projected image selection screen according to the seventh exemplary embodiment;
Fig. 33 is a diagram accompanying a description of a projected image selection screen according to the seventh exemplary embodiment;
Figs. 34A and 34B are diagrams accompanying a description of a projected object list screen according to an eighth exemplary embodiment;
Figs. 35A and 35B are diagrams accompanying a description of a projected object list screen according to the eighth exemplary embodiment;
Figs. 36A and 36B are diagrams accompanying a description of a projected object list screen according to the eighth exemplary embodiment;
Figs. 37A and 37B are diagrams accompanying a description of a projected object list screen according to the eighth exemplary embodiment;
Fig. 38 is a diagram accompanying a description of a projected object list screen according to the eighth exemplary embodiment;
Fig. 39 is a diagram accompanying a description of a print execution screen according to a ninth exemplary embodiment;
Fig. 40 is a diagram accompanying a description of a print execution screen according to the ninth exemplary embodiment;
Fig. 41 is a diagram accompanying a description of a print execution screen according to the ninth exemplary embodiment;
Fig. 42 is a diagram accompanying a description of a payment screen according to the ninth exemplary embodiment;
Fig. 43 is a diagram accompanying a description of a payment screen according to the ninth exemplary embodiment; and
Fig. 44 is a diagram accompanying a description of a payment screen according to the ninth exemplary embodiment.

### Detailed Description

Hereinafter, exemplary embodiments for carrying out the present disclosure will be described in detail and with reference to the drawings. Note that components and processes whose operations, actions, and functions serve the same role are denoted with the same signs throughout all drawings, and a duplicate description thereof may be reduced or omitted, as appropriate. Each drawing is merely a schematic illustration used as an aid to sufficiently understand the technology according to the present disclosure. Thus, the technology according to the present disclosure is not limited to the illustrated examples alone. Moreover, in the exemplary embodiments, a description may be reduced or omitted for well-known features and features not directly related to the present disclosure.

### [First exemplary embodiment]

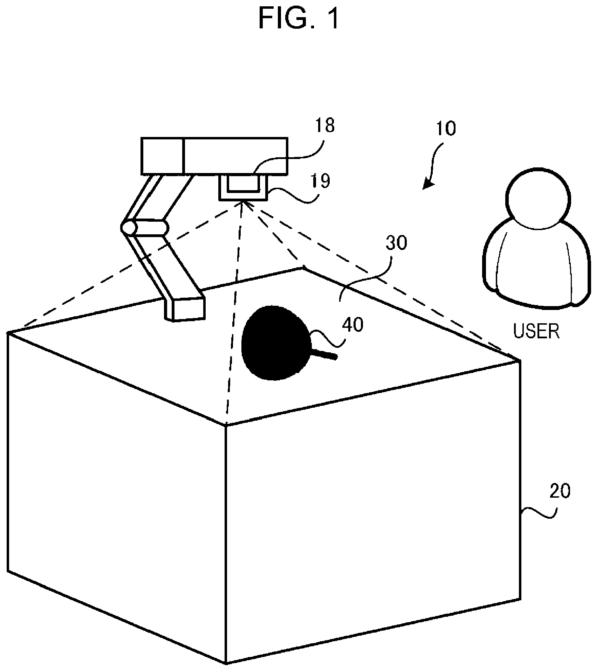

Fig. 1 is a diagram illustrating an example of the external appearance of an information processing device 10 according to a first exemplary embodiment.

As illustrated in Fig. 1, the information processing device 10 according to the present exemplary embodiment is provided with an image capture unit 18, a projection unit 19, and a printing unit 20. The image capture unit 18 and the projection unit 19 are provided in a unified way above the printing unit 20. A control device (not illustrated) of the information processing device 10 is housed inside the printing unit 20. A stage 30 is provided on the upper surface of the printing unit 20, and a real object 40 is placed on the stage 30. Herein, a real object refers to an object in a real space, as distinct from an object in a virtual space. The real object 40 in Fig. 1 is a "fan" as an example.

The image capture unit 18 is a camera, preferably a document camera, for example, and continuously captures images of the real object 40 placed on the stage 30. In addition, the image capture unit 18 continuously captures images of a user's hand raised above the real object 40 on the stage 30.

The projection unit 19 is a projector, preferably a short-throw projector, for example, and projects user-desired image data onto the real object 40 placed on the stage 30. In addition, the projection unit 19 projects a user interface (UI) screen for receiving operating input from the user onto the stage 30.

The printing unit 20 is an inkjet printer or an electrophotographic system, for example, and prints an image based on image data projected onto the real object 40 and edited by the user onto a recording medium such as paper.

The information processing device 10 according to the present exemplary embodiment is provided with a function for performing a process (hereinafter referred to as the "image projection and printing process") in which, in the case of printing a user-desired image to be inserted into or applied onto the real object 40, the information processing device 10 adjusts the size and the like of the image data while projecting the image data onto the real object 40, and then prints an image based on the adjusted image data. Note that the information processing device 10 may also include functions such as a scan function, a print function, and a copy function. The copy function, print function, and scan function are examples of image processing in the information processing device 10.

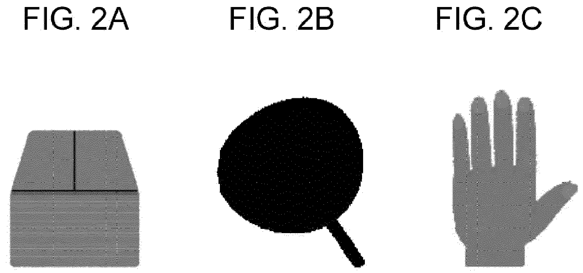

Figs. 2A to 2C are diagrams illustrating an example of the real object 40 according to the present exemplary embodiment. Examples of the real object 40 include a "gift box" as illustrated in Fig. 2A, a "fan" as illustrated in Fig. 2B, and the "user's hand" as illustrated in Fig. 2C.

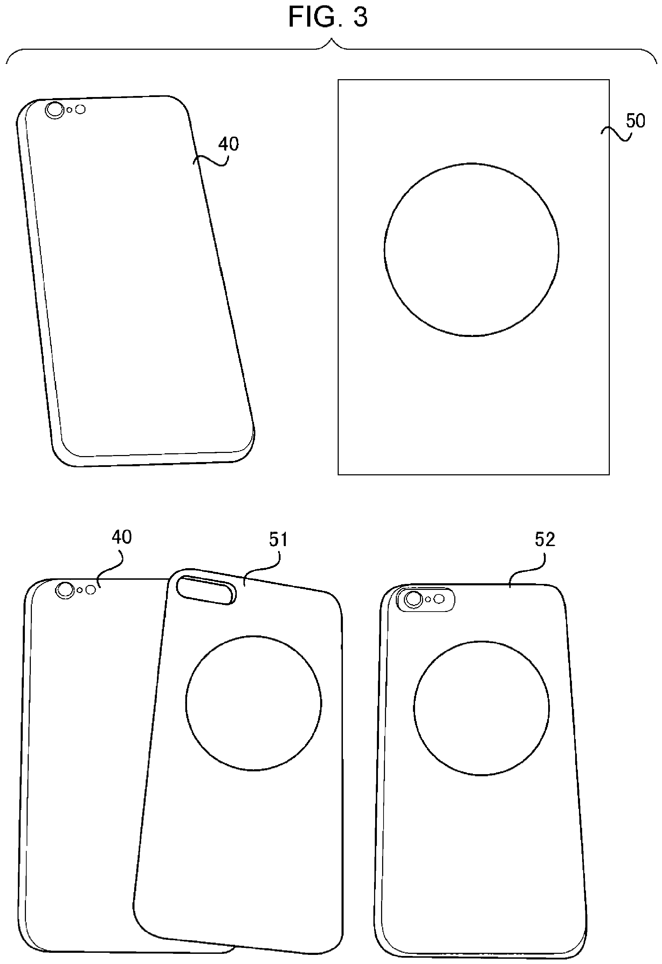

Fig. 3 is a diagram accompanying a description of a use case according to the present exemplary embodiment. The example in Fig. 3 illustrates a case of making a custom smartphone in which printed material obtained by printing image data is applied onto a case portion of a smartphone as an example of the real object 40.

As illustrated in Fig. 3, according to the information processing device 10 according to the present exemplary embodiment, user-desired image data 50 is projected onto the real object 40 (in the example of Fig. 3, a smartphone) placed on the stage 30 by the user. The user edits the projected image data 50 to fit the real object 40 and prints the edited image data 50 onto desired paper (for example, a postcard-sized sheet of paper) to obtain printed material 51. Note that the printed material 51 illustrated in the drawing has been cut out to fit the real object 40. Thereafter, the user applies the printed material 51 onto the real object 40 so create a finished product 52 (in the example of Fig. 3, a custom smartphone).

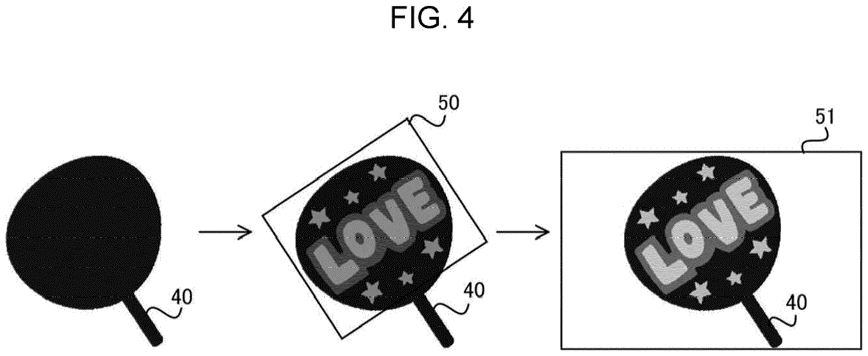

Fig. 4 is a diagram accompanying a description of another use case according to the present exemplary embodiment. The example in Fig. 4 illustrates a case of making a custom fan in which printed material obtained by printing image data is applied onto a fan as an example of the real object 40.

As illustrated in Fig. 4, according to the information processing device 10 according to the present exemplary embodiment, user-desired image data 50 is projected onto the real object 40 (in the example of Fig. 3, a fan) placed on the stage 30 by the user. The user edits the projected image data 50 to fit the real object 40 and prints the edited image data 50 onto desired paper (for example, a sheet of A4 paper) to obtain printed material 51. Thereafter, the user cuts out the printed material 51 to fit the real object 40 and applies the printed material 51 onto the real object 40 to create the custom fan.

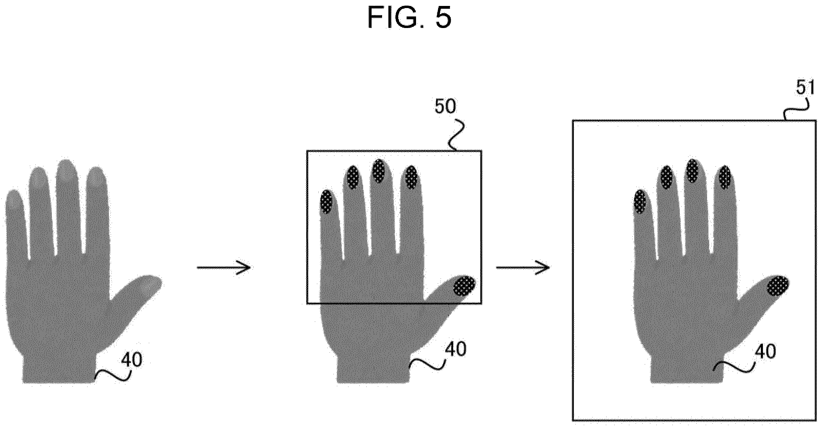

Fig. 5 is a diagram accompanying a description of yet another use case according to the present exemplary embodiment. The example in Fig. 5 illustrates a case of making custom nail art in which printed material obtained by printing image data is applied onto the user's hand as an example of the real object 40.

As illustrated in Fig. 5, according to the information processing device 10 according to the present exemplary embodiment, user-desired image data 50 (in the example of Fig. 5, nail art) is projected onto the real object 40 (in the example of Fig. 5, the user's hand) placed on the stage 30 by the user. However, in the example in Fig. 5, leaving the user's hand on the stage 30 makes it difficult to perform operations, and therefore image data obtained by capturing an image of the user's hand may be projected and used instead of the real object 40. In this case, the image data 50 and the image data representing the user's hand are combined and displayed, and only the image data 50 is edited. The user edits the projected image data 50 to fit the real object 40 and prints the edited image data 50 onto desired paper (for example, sticker paper) to obtain printed material 51. Thereafter, the user cuts out the printed material 51 to fit the real object 40 and applies the printed material 51 onto the real object 40 to create the custom nail art.

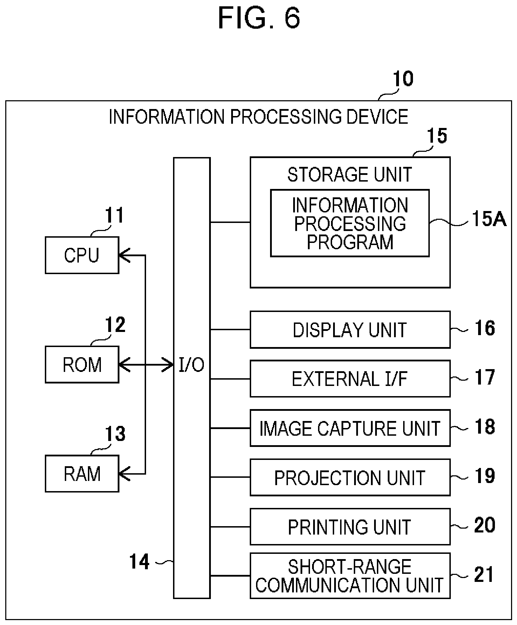

Fig. 6 is a block diagram illustrating an example of an electrical configuration of the information processing device 10 according to the first exemplary embodiment.

As illustrated in Fig. 6, the information processing device 10 according to the present exemplary embodiment is provided with a central processing unit (CPU) 11, read-only memory (ROM) 12, random access memory (RAM) 13, an input/output interface (I/O) 14, a storage unit 15, a display unit 16, an external interface (external I/F) 17, an image capture unit 18, a projection unit 19, a printing unit 20, and a short-range communication unit 21.

The CPU 11, ROM 12, RAM 13, and I/O 14 are interconnected via a bus. Functional units including the storage unit 15, display unit 16, external I/F 17, image capture unit 18, projection unit 19, printing unit 20, and short-range communication unit 21 are connected to the I/O 14. Each of these functional units is capable of bidirectional communication with the CPU 12 via the I/O 14.

The CPU 11, ROM 12, RAM 13, and I/O 14 form a control device. The control device may be configured as a sub-controller that controls a subset of operations of the information processing device 10, or may be configured as a main controller that controls all operations of the information processing device 10. An integrated circuit such as a large-scale integration (LSI) chip or an integrated circuit (IC) chipset is used for some or all of the blocks of the control device, for example. A discrete circuit may be used for each of the above blocks, or a circuit integrating some or all of the above blocks may be used. The above blocks may be provided together as a single body, or some blocks may be provided separately. Also, a part of each of the above blocks may be provided separately. The integration of the control device is not limited to LSI, and a dedicated circuit or a general-purpose processor may also be used.

For the storage unit 15, a hard disk drive (HDD), a solid-state drive (SSD), flash memory, or the like is used, for example. An information processing program 15A for executing the image projection and printing process according to the present exemplary embodiment is stored in the storage unit 15. Note that the information processing program 15A may be stored in the ROM 12.

The information processing program 15A may be preinstalled in the information processing device 10, for example. The information processing program 15A may also be achieved by being stored on a non-volatile storage medium or distributed over a network, and appropriately installed in the information processing device 10. Note that anticipated examples of the non-volatile storage medium include a Compact Disc - Read-Only Memory (CD-ROM), a magneto-optical disc, an HDD, a Digital Versatile Disc - Read-Only Memory (DVD-ROM), flash memory, a memory card, and the like.

In the present exemplary embodiment, a UI screen enabling the user to perform operations is projected onto the stage 30 by the projection unit 19, but it is also possible to provide a separate display unit 16 and display a partial UI screen on the display unit 16. For the display unit 16, a liquid crystal display (LCD), an organic light-emitting diode (OLED) display, or the like is used, for example. The display 16 includes an integrated touch panel. The display unit 16 is provided in a portion of the stage 30, for example. The display unit 16 acts as an operating panel that receives various instructions related to the image projection and printing process from the user of the information processing device 10. Additionally, the display 16 displays various information such as the results of processes executed according to instructions received from the user, notifications about processes, and the like.

The external I/F 17 connects to a portable storage medium such as Universal Serial Bus (USB) memory or a memory card carried by the user, and inputs image data stored in advance on the portable storage medium into the information processing device 10.

As described above, the image capture unit 18 is a camera, preferably a document camera, for example, and continuously captures images of the real object 40 placed on the stage 30. In addition, the image capture unit 18 continuously captures images of a user's hand raised above the real object 40 on the stage 30.

As described above, the projection unit 19 is a projector, preferably a short-throw projector, for example, and projects user-desired image data onto the real object 40 placed on the stage 30. In addition, the projection unit 19 projects a UI screen for receiving operating input from the user onto the stage 30.

As described above, the printing unit 20 is an inkjet printer or an electrophotographic system, for example, and prints an image based on image data projected onto the real object 40 and edited by the user onto a recording medium such as paper.

In the case where the system for forming images is an electrophotographic system, the printing unit 20 includes a photoreceptor drum, a charging device, an exposure device, a developing device, a transfer device, and a fusing device. The charging device applies a voltage to the photoreceptor drum to charge the surface of the photoreceptor drum. The exposure device forms an electrostatic latent image on the photoreceptor drum by exposing the photoreceptor drum charged by the charging device with light corresponding to image data. The developing device forms a toner image on the photoreceptor drum by developing with toner the electrostatic latent image formed on the photoreceptor drum. The transfer device transfers the toner image formed on the photoreceptor drum onto paper. The fusing device fuses the transferred toner image to the paper with heat and pressure.

The short-range communication unit 21 communicates with a mobile terminal (such as a smartphone, for example) carried by the user via short-range wireless communication, and inputs image data stored in advance in the mobile terminal into the information processing device 10. A communication standard such as near field communication (NFC) or Bluetooth(R) is implemented in the short-range communication unit 21, for example. NFC refers to a short-range wireless communication technology using a frequency of 13.56 MHz over a distance of about 10 cm.

Incidentally, as described above, in the case where there are multiple real objects 40 onto which image data is to be projected, no consideration is given regarding how a desired real object is to be selected.

Accordingly, the information processing device 10 according to the present exemplary embodiment detects the position on the stage 30 of each of the multiple real objects 40 treated as a candidate for the projection of image data, receives the selection of a real object 40 as a projection target from among the multiple real objects 40 according to the content of an operation performed by the user on the multiple real objects 40 and the position on the stage 30 of each of the multiple real objects 40, projects image data onto the selected real object 40 according to the position on the stage 30 of the selected real object 40, and then prints the image data.

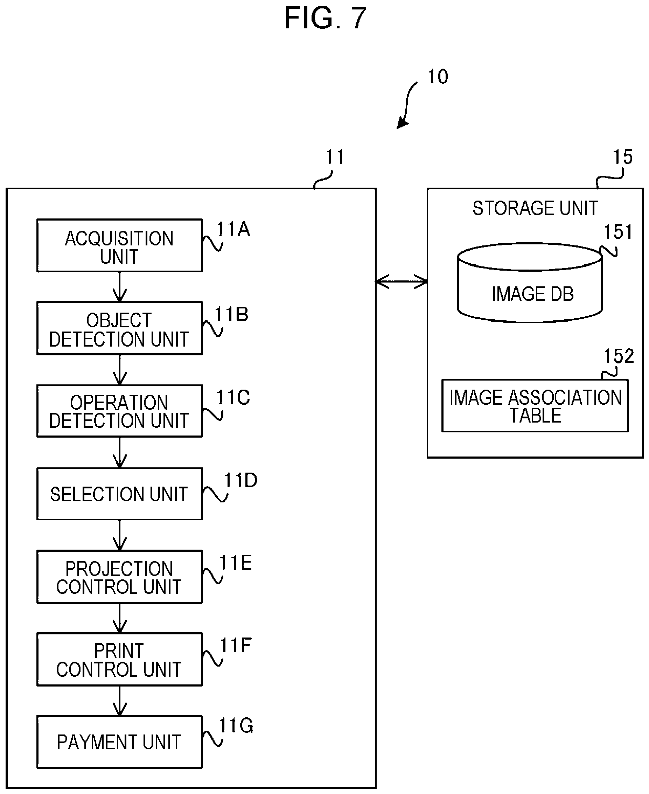

Specifically, the CPU 11 of the information processing device 10 according to the present exemplary embodiment functions as each of the units illustrated in Fig. 7 by loading the information processing program 15A stored in the storage unit 15 into the RAM 13 and executing the program. Note that the CPU 11 is an example of a processor.

Fig. 7 is a block diagram illustrating an example of a functional configuration of the information processing device 10 according to the first exemplary embodiment.

As illustrated in Fig. 7, the CPU 11 of the information processing device 10 according to the present exemplary embodiment functions as an acquisition unit 11A, an object detection unit 11B, an operation detection unit 11C, a selection unit 11D, a projection control unit 11E, a print control unit 11F, and a payment unit 11G.

An image database (DB) 151 and an image association table 152 are stored in the storage unit 15. The image DB 151 stores image data acquired from a portable storage medium or mobile terminal carried by the user and also stores edited image data that has been edited in the past. Also, the image association table 152 is a data table for registering correspondence relationships between image data and real objects onto which image data is projected. For example, identification information expressing an "image of a dog" and identification information expressing a "fan" are registered in association with each other in the image association table 152.

The acquisition unit 11A acquires image data to be projected from among the image data obtained from the portable storage medium or mobile terminal carried by the user.

The object detection unit 11B detects multiple real objects 40 placed on the stage 30. At this time, the object detection unit 11B detects the position on the stage 30 of each of the multiple real objects 40. Specifically, the object detection unit 11B detects the multiple real objects 40 by analyzing an image of the multiple real objects 40 captured by the image capture unit 18. The positions of the multiple real objects 40 are expressed as coordinates in relation to a reference point set to a specific position (center, upper-left corner, lower-left corner, upper-right corner, lower-right corner) in an image of the stage 30 captured by the image capture unit 18, for example.

The object detection unit 11B may capture and detect the outline of a real object 40. By printing an outline onto paper together with an image based on image data corresponding to a real object 40, the outline may be used as an image cutting line.

The operation detection unit 11C detects the content of an operation performed by the user on the multiple real objects 40. The operation performed by the user is any of an operation performed as a gesture by the user, an operation performed by the user on a button projected onto the stage 30, an operation performed as speech spoken by the user, or an operation performed according to the user's line of sight, for example. In the case of a gesture operation, a gesture operation performed by the user's hand is detected by analyzing an image of the user's hand raised above the real objects 40 captured by the image capture unit 18.

The selection unit 11D receives the selection of a real object 40 as a projection target from among the multiple real objects 40 according to the content of the operation performed by the user on the multiple real objects 40 and the position of each of the multiple real objects 40 on the stage 30.

The projection control unit 11E controls the projection unit 19 to project image data acquired by the acquisition unit 11A onto the real object 40 whose selection is received by the selection unit 11D, such that the image data is projected according to the position of the selected real object 40 on the stage 30. At this time the projection control unit 11E receives an edit operation by the user with respect to the image data. Known technology may be applied to the editing of the projected image data, and for example, editing such as enlarging, reducing, moving, rotating, and adjusting the position of a projected image is possible in accordance with user operations. Note that the projected image data may be edited directly or projected and edited separately on an edit screen.

The print control unit 11F controls the printing unit 20 to print the edited image data projected by the projection unit 19 in accordance with a designated paper size (such as A4, B5, or postcard, for example) and paper type (such as plain paper, card stock, label paper, or sticker paper, for example).

The payment unit 11G executes payment (electronic payment) using the user's mobile phone or IC card, for example, for the printed material obtained from the printing by the printing unit 20.

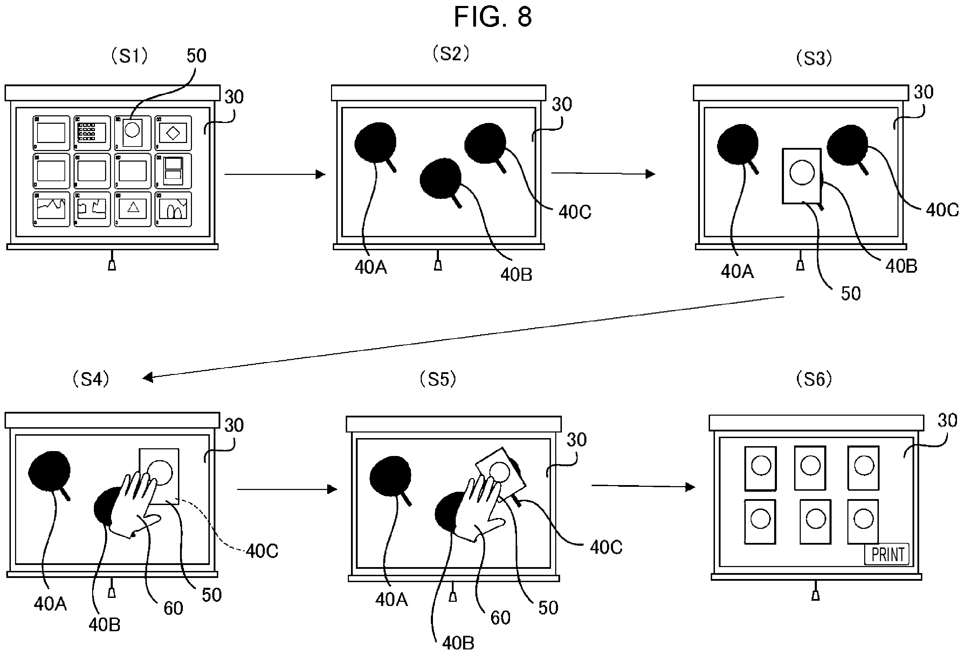

Next, the image projection and printing process by the information processing device 10 according to the present exemplary embodiment will be described specifically with reference to Figs. 8 to 10. Note that the examples in Figs. 8 to 10 illustrate overhead views of the stage 30.

Fig. 8 is a diagram accompanying a description of the image projection and printing process by the information processing device 10 according to the present exemplary embodiment.

In (S1) of Fig. 8, an image list, that is, a list of image data acquired from the portable storage medium or mobile terminal carried by the user, is projected onto the stage 30. The user selects the desired image data 50 to print from the image list.

In (S2), multiple real objects 40A, 40B, and 40C (in the example of Fig. 8, "fans") carried by the user are placed on the stage 30. Hereinafter, the multiple real objects 40A, 40B, and 40C may simply be referred to as the real objects 40 when not being distinguished individually.

In (S3), the image data 50 selected in (S1) above is projected onto the central real object 40B among the multiple real objects 40A, 40B, and 40C placed on the stage 30 in (S2) above.

In (S4), a gesture operation performed by the user's hand 60 (hereinafter also referred to as the "user's finger 60" or the "user's hands 60") is detected, and the projection target of the image data 50 is moved from the real object 40B to the real object 40C.

In (S5), a gesture operation performed by the user's hand 60 is detected, edits to the projected image data 50 are received, and the edited image data is added to a print job.

In (S6), if the user selects desired image data to print from a list of images registered as print jobs and presses a "Print" button, the selected image data is printed.

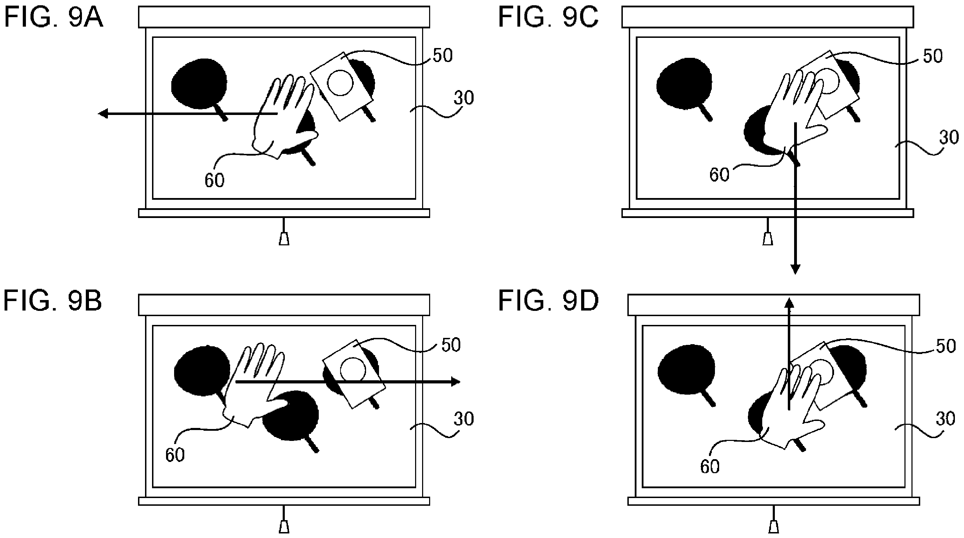

Figs. 9A to 9D are diagrams accompanying a description of gesture operations according to the present exemplary embodiment.

As illustrated in Fig. 9A, a gesture operation in which the user's hand 60 moves to the left edge of the stage 30 from the center of the stage 30 or the position of the image data 50 being edited is taken to be an "Undo" operation for undoing an edit. Also, as illustrated in Fig. 9B, a gesture operation in which the user's hand 60 moves to the right edge of the stage 30 from the center of the stage 30 or the position of the image data 50 being edited is taken to be a "Redo" operation for redoing an edit. Also, as illustrated in Fig. 9C, a gesture operation in which the user's hand 60 moves to the bottom edge of the stage 30 from the center of the stage 30 or the position of the image data 50 being edited is taken to be an operation for removing the projected image data 50. Note that in the case where edits have been made to the projected image data 50, it is desirable to project a message indicating that edits have been made and obtain user confirmation before removing the image data 50. Also, as illustrated in Fig. 9D, a gesture operation in which the user's hand 60 moves to the top edge of the stage 30 from the center of the stage 30 or the position of the image data 50 being edited is taken to be an operation for adding the image data 50 being edited to the image DB 151 as edited image data.

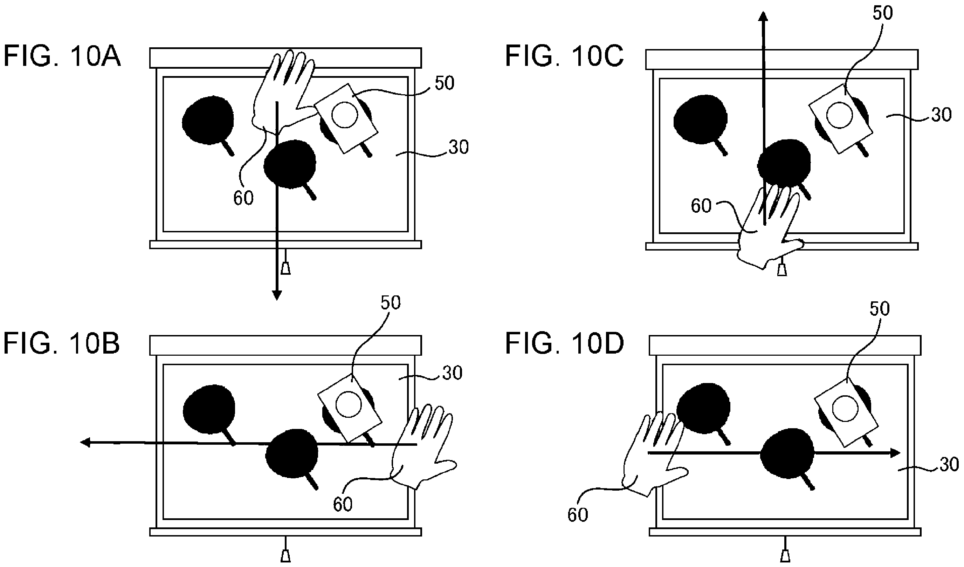

Figs. 10A to 10D are diagrams accompanying a description of other gesture operations according to the present exemplary embodiment.

As illustrated in Fig. 10A, a gesture operation in which the user's hand 60 moves from the top edge of the stage 30 toward the bottom edge is taken to be an operation for projecting an edited image list screen described later. Note that if the user's hand 60 moves in the opposite direction after the above operation, the projection of the edited image list screen ends. If the image data 50 is being edited, the most recent editing content is retained. Also, as illustrated in Fig. 10B, a gesture operation in which the user's hand 60 moves from the right edge of the stage 30 toward the left edge is taken to be an operation for projecting a print execution screen described later if one or more print jobs exist. Note that in the case where edits have been made to the projected image data 50, it is desirable to project a message indicating that edits have been made and obtain user confirmation before projecting the print execution screen. On the other hand, if no print jobs exist, a message indicating the same is projected. Also, as illustrated in Fig. 10C, a gesture operation in which the user's hand 60 moves from the bottom edge of the stage 30 toward the top edge is taken to be an operation for projecting a projected image selection screen described later. Also, as illustrated in Fig. 10D, a gesture operation in which the user's hand 60 moves from the left edge of the stage 30 toward the right edge is taken to be an operation for projecting a projected object list screen described later.

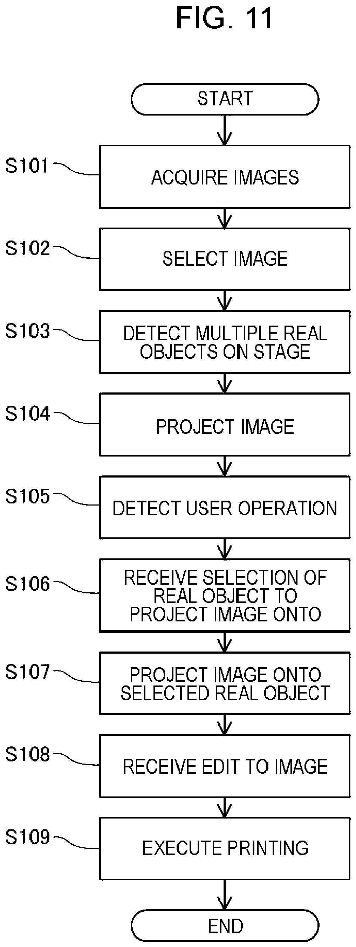

Next, Fig. 11 will be referenced to describe the actions of the information processing device 10 according to the first exemplary embodiment.

Fig. 11 is a flowchart illustrating an example of the flow of a process by the information processing program 15A according to the first exemplary embodiment.

First, if the information processing device 10 is instructed to execute the image projection and printing process, the information processing program 15A is launched by the CPU 11 and the following steps are executed.

In step S101 of Fig. 11, the CPU 11 acquires image data from the portable storage medium or mobile terminal carried by the user.

In step S102, the CPU 11 projects an image list, that is, a list of the image data acquired in step S101, onto the stage 30, and receives the selection of desired image data to be printed from the user.

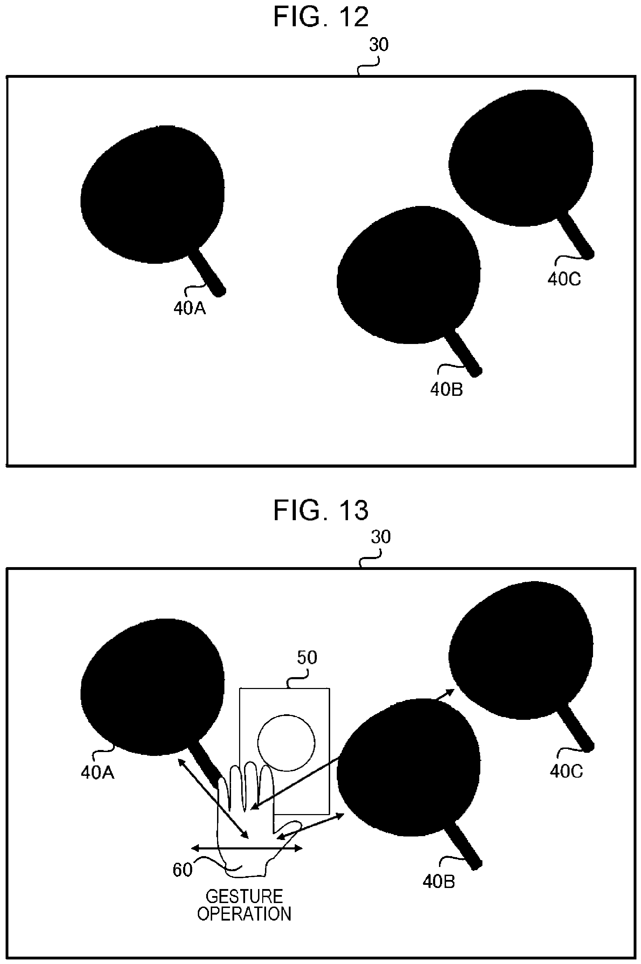

In step S103, the CPU 11 detects, for example, the multiple real objects 40A to 40C placed on the stage 30 by the user as illustrated in Fig. 12. At this time, the position on the stage 30 of each of the multiple real objects 40A to 40C is detected.

Fig. 12 is a diagram illustrating an example of the multiple real objects 40A to 40C placed on the stage 30 according to the present exemplary embodiment. In the example in Fig. 12, multiple "fans" as an example of the multiple real objects 40A to 40C are placed on the stage 30, and all are treated as projection target candidates. Note that the example in Fig. 12 illustrates an overhead view of the stage 30.

In step S104, the CPU 11 projects the image data 50 selected in step S102 onto the stage 30 at a default position as illustrated in Fig. 13, for example.

Fig. 13 is a diagram illustrating an example of the image data 50 projected onto the stage 30 according to the present exemplary embodiment. In the example in Fig. 13, the default position where the image data 50 is projected is approximately in the center of the real object 40.

In step S105, the CPU 11 detects a user operation on the multiple real objects 40A to 40C. For example, as illustrated in Fig. 13, a gesture operation performed by the user's hand 60 is detected.

In step S106, the CPU 11 receives the selection of a real object 40 to be treated as the projection target from among the multiple real objects 40A to 40C according to the user operation detected in step S105.

In step S107, the CPU 11 projects the image data 50 onto the real object 40 selected in step S106. Here, as illustrated in Fig. 13, the gesture operation performed by the user's hand 60 is detected, the selection of the real object 40 to be treated as the projection target is received, and the image data 50 is projected onto the selected real object 40.

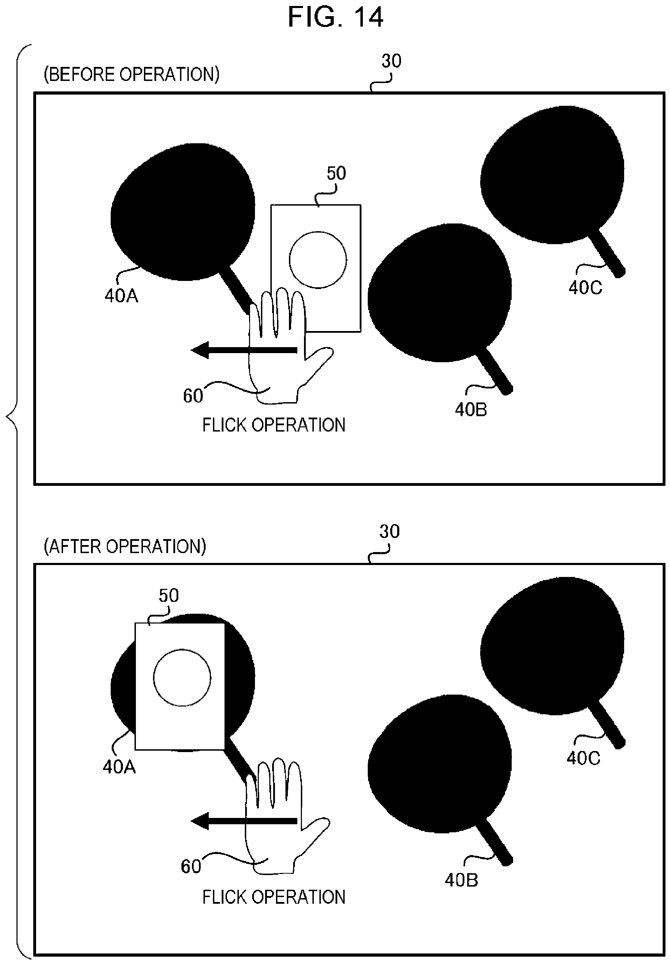

Gesture operations performed by the user's hand 60 will be described specifically with reference to Figs. 14 to 16.

Fig. 14 is a diagram accompanying a description of a gesture operation performed by the user's hand 60 according to the present exemplary embodiment. The example in Fig. 14 illustrates a flick operation, that is, an operation in which the user's hand 60 swipes the image data 50 away in a desired direction.

As illustrated in Fig. 14, if a flick operation is performed by the user's hand 60 on the stage 30, the image data 50 moves to the real object 40 positioned in the direction that the user's hand 60 moved. In the example in Fig. 14, the user's hand 60 has performed a single flick to the left, and therefore the image data 50 moves to the real object 40 positioned to the left of the default position. A real object does not exist to the left of the real object 40A, and therefore if the user's hand 60 performs another flick to the left, the image data 50 moves from the real object 40A to the real object 40C.

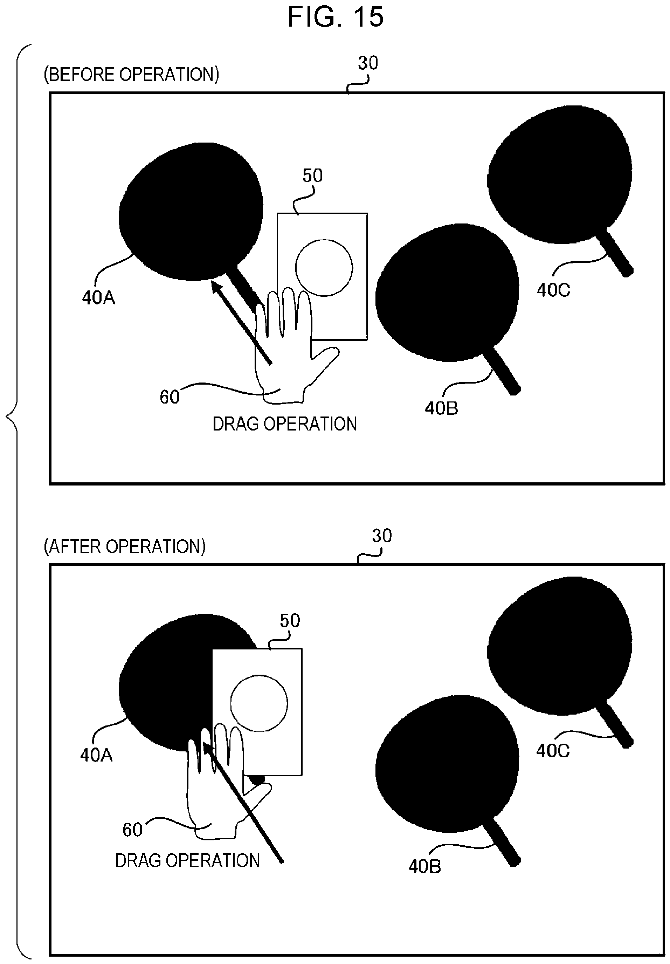

Fig. 15 is a diagram accompanying a description of another gesture operation performed by the user's hand 60 according to the present exemplary embodiment. The example in Fig. 15 illustrates a drag operation, that is, an operation in which the user's hand 60 pulls the image data 50 to a desired position.

As illustrated in Fig. 15, if a drag operation is performed by the user's hand 60 on the stage 30, the image data 50 moves to the real object 40 closest to the position where the image data 50 was dropped (that is, released) by the user's hand 60. In the example in Fig. 15, the image data 50 has been dropped near the real object 40A, and therefore the image data 50 moves from the default position to the real object 40A.

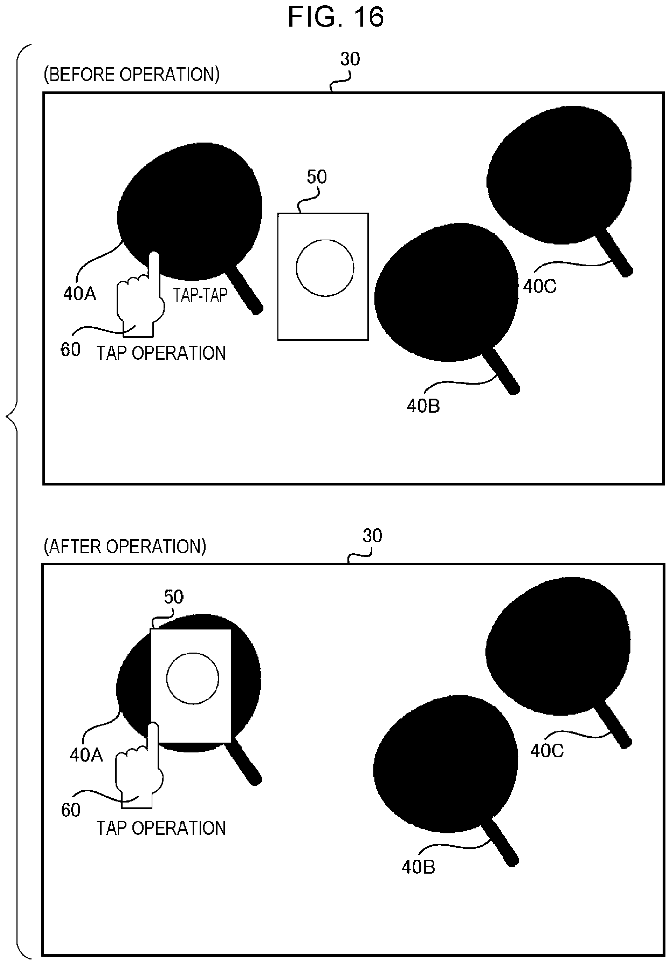

Fig. 16 is a diagram accompanying a description of yet another gesture operation performed by the user's hand 60 according to the present exemplary embodiment. The example in Fig. 16 illustrates a tap operation, that is, an operation in which the user's finger 60 lightly strikes a real object 40.

As illustrated in Fig. 16, if a tap operation is performed by the user's finger 60 on the stage 30, the image data 50 moves to the real object 40 tapped by the user's finger 60. In the example in Fig. 16, the real object 40A is tapped twice, and therefore the image data 50 moves from the default position to the real object 40A. Note that the above is not limited to a tap operation, and image data may also be moved to a real object 40 specified by a pointing gesture performed by the user's finger 60.

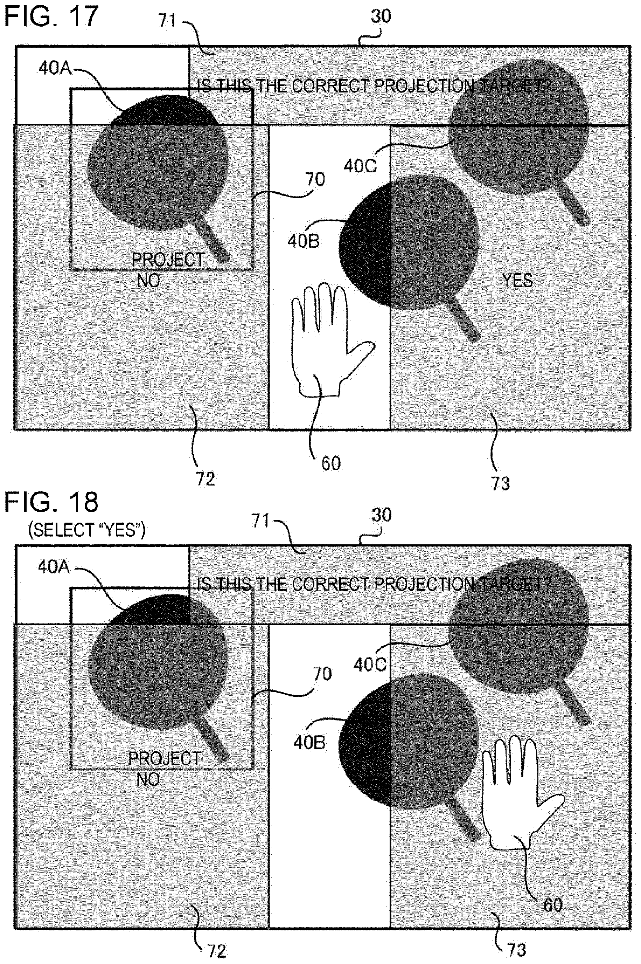

Next, button operations performed by the user's hand 60 will be described specifically with reference to Figs. 17 to 20.

Figs. 17 to 20 are diagrams accompanying a description of button operations performed by the user's hand 60 according to the present exemplary embodiment.

As illustrated in Fig. 17, multiple real objects 40A to 40C are placed on the stage 30, and the real object 40A is selected as the projection target. Note that in the example in Fig. 17, the real object 40A selected as the projection target is clearly indicated by a frame 70. A message display field 71, a "No" button 72, and a "Yes" button 73 are projected as transparent objects onto the stage 30. The message "Is this the correct projection target?" is displayed in the message display field 71. If the projection target is correct, the user moves the user's hand 60 to the "Yes" button 73, whereas if the projection target is incorrect, the user moves the user's hand 60 to the "No" button 72. The "Yes" button 73 or the "No" button 72 is selected by a tap operation performed by the user's hand 60 or by an operation of holding the user's hand 60 still for a fixed time, for example.

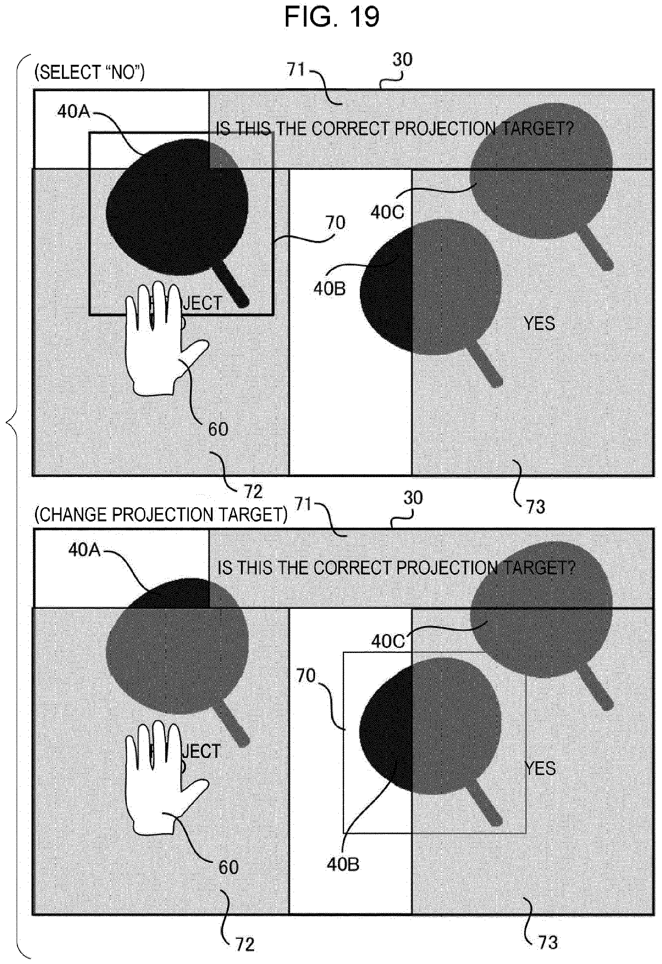

As illustrated in Fig. 18, if the user's hand 60 selects the "Yes" button 73, the projection target is confirmed. On the other hand, as illustrated in Fig. 19, if the user's hand 60 selects the "No" button 72, the projection target is changed. In the example in Fig. 19, the frame 70 moves from the real object 40A to the real object 40B, and the projection target is changed from the real object 40A to the real object 40B.

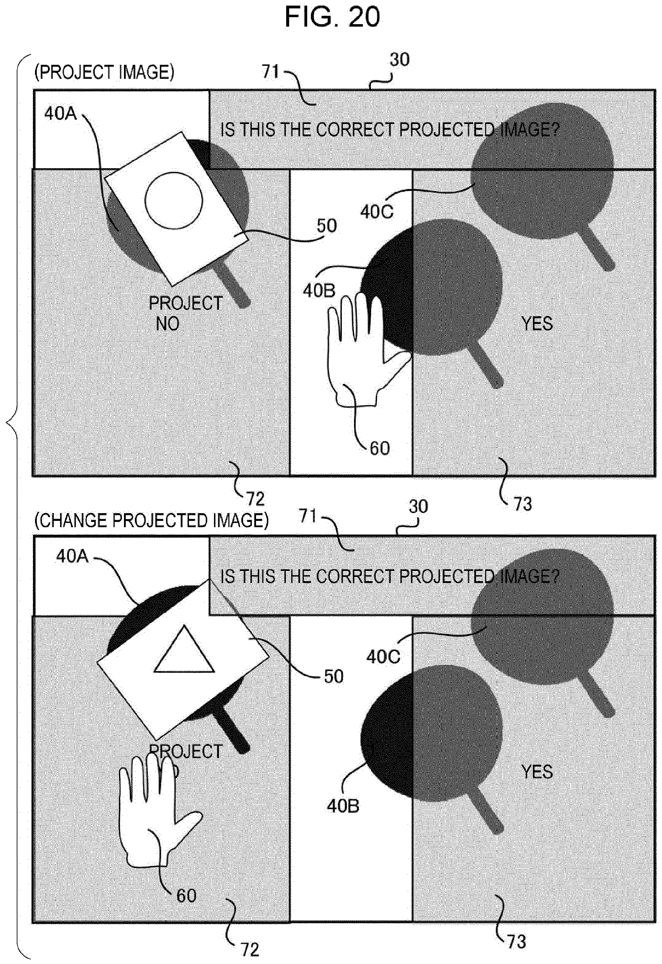

If the projection target has been confirmed as above, the image data to be projected may also be changed using a button operation, as illustrated in Fig. 20, for example.

The message display field 71, the "No" button 72, and the "Yes" button 73 are projected as transparent objects onto the stage 30 illustrated in Fig. 20, similarly to the examples in Figs. 17 to 19. The message "Is this the correct projected image?" is displayed in the message display field 71. If the projected image is correct, the user moves the user's hand 60 to the "Yes" button 73, whereas if the projected image is incorrect, the user moves the user's hand 60 to the "No" button 72. The "Yes" button 73 or the "No" button 72 is selected by a tap operation performed by the user's hand 60 or by an operation of holding the user's hand 60 still for a fixed time, for example.

In the example in Fig. 20, the image data 50 being projected is changed every time the "No" button 72 is selected. Thereafter, when the desired image data is displayed, the user selects the "Yes" button 73 to confirm the projected image.

Returning to Fig. 11, in step S108, the CPU 11 receives an edit to the image data 50 projected in step S107. As described above, editing such as enlarging, reducing, moving, rotating, and adjusting the position of the projected image is executed in accordance with user operations, for example. Note that edited image data is stored in the image DB 151, and correspondence relationships between edited image data and real objects are registered in the image association table 152.

In step S109, the CPU 11 causes the image data 50 edited in step S108 to be printed in accordance with a designated paper size (such as A4, B5, or postcard, for example) and paper type (such as plain paper, card stock, label paper, or sticker paper, for example). Thereafter, the series of processes according to the information processing program 15A ends.

Note that the above describes a configuration in which gesture operations and button operations performed by the user are used when selecting a desired real object 40 as the projection target from among multiple real objects 40, but similar selection operations may also be performed as operations according to speech spoken by the user. In this case, the information processing device 10 may be provided with a speech recognition function. Moreover, similar selection operations may also be performed as operations according to the user's line of sight. In this case, the information processing device 10 may be provided with a gaze detection function.

In this way, according to the present exemplary embodiment, a desired real object is selected in the case where image data is projected onto a desired real object and printed after confirming properties such as the size of the image data, even if there are multiple real objects onto which image data is to be projected.

### [Second exemplary embodiment]

The second exemplary embodiment describes a configuration in which a projected image is resized automatically to match the size of a real object.

The CPU 11 of the information processing device according to the present exemplary embodiment (hereinafter referred to as the "information processing device 10A") functions as an acquisition unit 11A, an object detection unit 11B, an operation detection unit 11C, a selection unit 11D, a projection control unit 11E, a print control unit 11F, and a payment unit 11G, similarly to the information processing device 10 described in the first exemplary embodiment above. Hereinafter, the points where the information processing device 10A according to the present exemplary embodiment differs from the information processing device 10 according to the first exemplary embodiment above will be described.

The object detection unit 11B detects the size of each of multiple real objects 40.

If the image data 50 is being projected onto a first real object among the multiple real objects 40 and the selection of a second real object different from the first real object is received according to a user operation, the projection control unit 11E controls the projection onto the second real object such that the size of the image data is adjusted to match the size of the second real object.

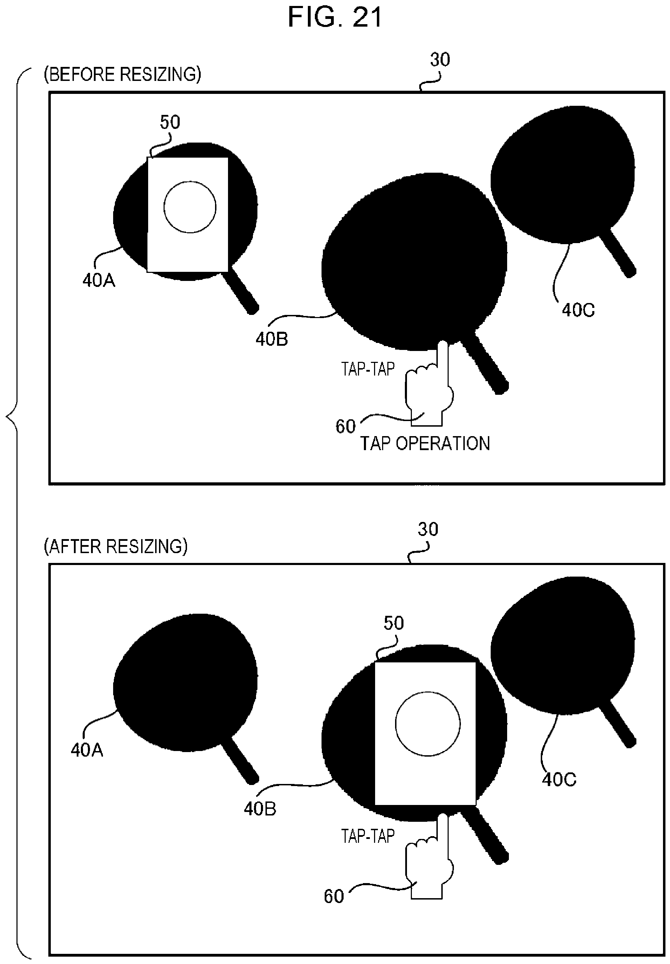

Fig. 21 is a diagram accompanying a description of a process for automatically resizing the image data 50 according to the second exemplary embodiment.

As illustrated in Fig. 21, before resizing, the image data 50 is projected onto the real object 40A as an example of the first object from among the multiple real objects 40A to 40C. In the example in Fig. 21, if the user's finger 60 performs a tap operation on the real object 40B as an example of the second real object, the real object 40B is selected. Accordingly, after resizing, the size of the image data 50 is adjusted to match the size of the selected real object 40B and projected onto the real object 40B.

In this way, according to the present exemplary embodiment, projected image data is resized to match the size of a real object. Consequently, the workload for resizing image data is reduced.

### [Third exemplary embodiment]

The third exemplary embodiment describes a configuration that automatically selects the real object onto which image data is to be projected.

The CPU 11 of the information processing device according to the present exemplary embodiment (hereinafter referred to as the "information processing device 10B") functions as an acquisition unit 11A, an object detection unit 11B, an operation detection unit 11C, a selection unit 11D, a projection control unit 11E, a print control unit 11F, and a payment unit 11G, similarly to the information processing device 10 described in the first exemplary embodiment above. Hereinafter, the points where the information processing device 10B according to the present exemplary embodiment differs from the information processing device 10 according to the first exemplary embodiment above will be described.

In a case where previously edited image data similar to the image data 50 exists and a real object similar to the real object previously associated with the edited image data exists among the multiple real objects 40, the projection control unit 11E controls the projection of at least one of the image data 50 or the similar edited image data onto the similar real object among the multiple real objects 40. Note that the similar edited image data is image data obtained by editing the image data 50, for example, and is image data based on the same original image data. For example, edited image data may be assigned an identification number to indicate that the original image data is the same. The edited image data is stored in the image DB 151. Also, for the determination of similarity, a method such as pattern matching or machine learning may be used, for example.

Also, when determining a similar real object, the object detection unit 11B detects the shape of each of the multiple real objects 40. On the basis of the results detected by the object detection unit 11B, the projection control unit 11E determines whether a real object having a shape similar to the real object previously associated with the edited image data exists among the multiple real objects 40. For the determination of similarity, a method such as pattern matching or machine learning is used, for example. Also, a real object may be determined to be similar if information specifying the real object is the same. In other words, if the real object 40 is a "fan", for example, a real object having information indicating "fan" is determined to be similar. Information specifying a real object previously associated with edited image data is obtained from the image association table 152.

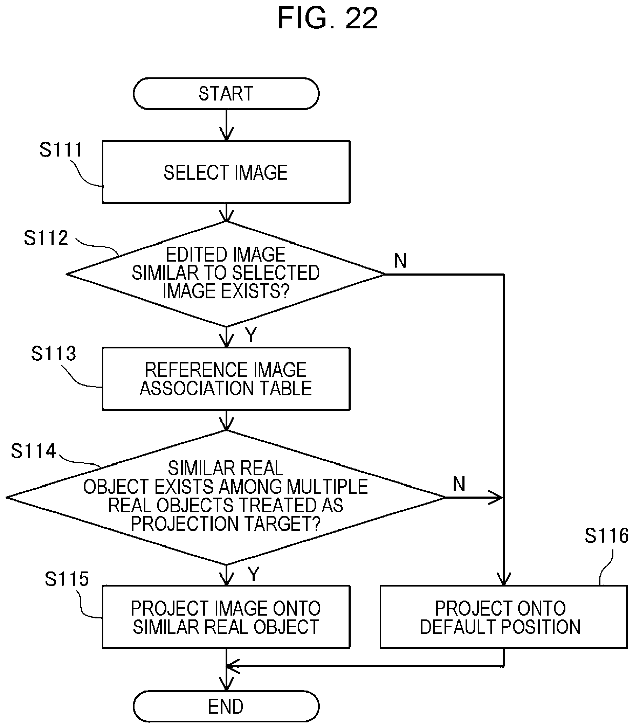

Next, Fig. 22 will be referenced to describe the actions of the information processing device 10 according to the third exemplary embodiment.

Fig. 22 is a flowchart illustrating an example of the flow of an automatic selection process by the information processing program 15A according to the third exemplary embodiment.

First, if the information processing device 10 is instructed to execute the automatic selection process, the information processing program 15A is launched by the CPU 11 and the following steps are executed.

In step S111 of Fig. 22, the CPU 11 selects image data 50 to be projected onto the stage 30 in accordance with a user operation.

In step S112, the CPU 11 determines whether the image DB 151 includes edited image data similar to the image data 50 selected in step Sill. If the image DB 151 is determined to include similar image data (if the determination is positive), the flow proceeds to step S113, whereas if the image DB 151 is determined not to include similar image data (if the determination is negative), the flow proceeds to step S116.

In step S113, the CPU 11 references the image association table 152 on the basis of the edited image data similar to the image data 50.

In step S114, the CPU 11 determines, from the image association table 152 referenced in step S113, whether a real object having a shape similar to a real object previously associated with the edited image data exists among the multiple real objects 40A to 40C placed on the stage 30. If a similar real object is determined to exist (if the determination is positive), the flow proceeds to step S115, whereas if a similar real object is determined not to exist (if the determination is negative), the flow proceeds to step S116.

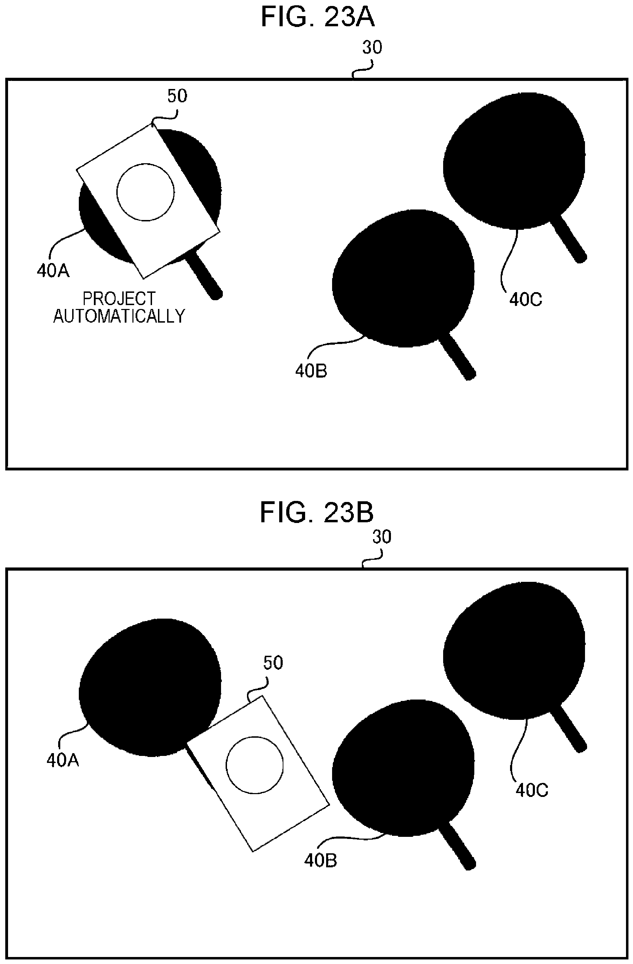

In step S115, the CPU 11 projects the image data 50 selected in step S111 onto the similar real object 40A as illustrated in Fig. 23A, for example, and ends the automatic selection process. Fig. 23A is a diagram illustrating an example of the image data 50 projected onto a similar real object.

On the other hand, in step S116, the CPU 11 projects the image data 50 selected in step S111 onto the default position of the stage 30 as illustrated in Fig. 23B, for example, and ends the automatic selection process. Fig. 23B is a diagram illustrating an example of the image data 50 projected onto the default position.

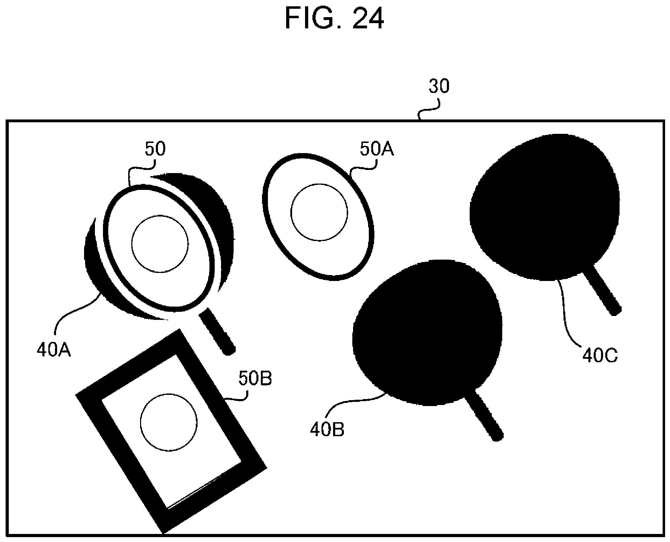

At this point, if there are multiple pieces of similar edited image data, the projection control unit 11E may cause the multiple pieces of edited image data to be projected together with the image data 50 or instead of the image data 50 as illustrated in Fig. 24, for example. Fig. 24 is a diagram illustrating an example of multiple pieces of edited image data 50A and 50B projected together with the image data 50. In the example in Fig. 24, the image data 50 is the image data currently being edited, and the edited image data 50A and 50B is image data that was previously edited and stored in the image DB 151.

In this way, according to the present exemplary embodiment, the real object onto which image data is to be projected is selected automatically. Consequently, the user does not have to select a real object manually, and the workload for selecting a real object is reduced.

### [Fourth exemplary embodiment]

The fourth exemplary embodiment describes a configuration in which multiple projection target candidates are handled collectively as a single projection target.

The CPU 11 of the information processing device according to the present exemplary embodiment (hereinafter referred to as the "information processing device 10C") functions as an acquisition unit 11A, an object detection unit 11B, an operation detection unit 11C, a selection unit 11D, a projection control unit 11E, a print control unit 11F, and a payment unit 11G, similarly to the information processing device 10 described in the first exemplary embodiment above. Hereinafter, the points where the information processing device 10C according to the present exemplary embodiment differs from the information processing device 10 according to the first exemplary embodiment above will be described.

The projection control unit 11E groups multiple real objects 40 together as a single projection target according to a user operation, and causes the image data 50 to be projected onto the single grouped projection target.

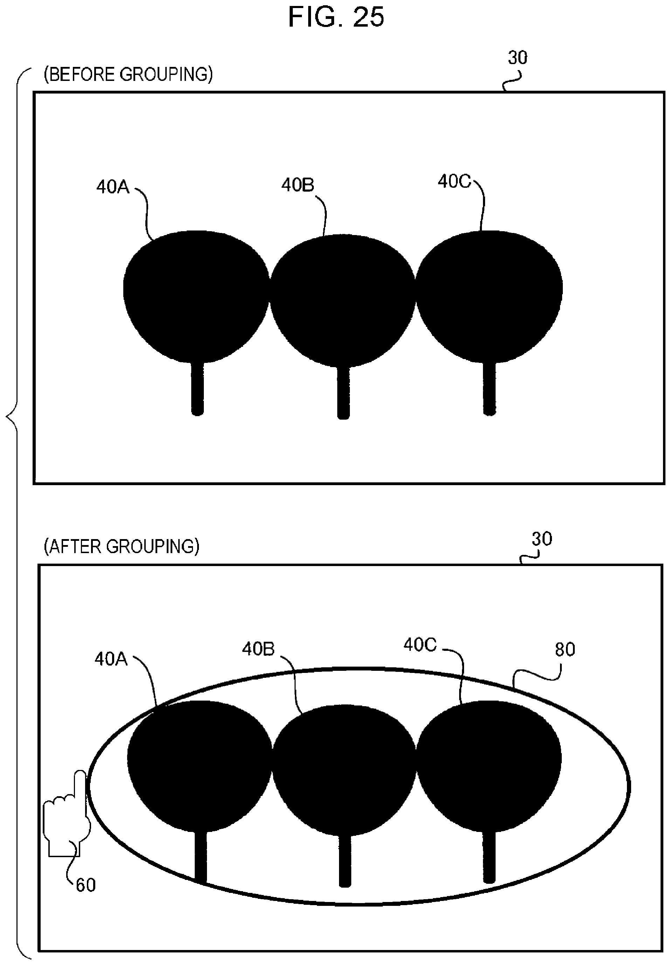

Fig. 25 is a diagram accompanying a description of a process of grouping multiple real objects 40A to 40C according to the fourth exemplary embodiment.

As illustrated in Fig. 25, before grouping, multiple real objects 40A to 40C are placed side-by-side on the stage 30. The multiple real objects 40A to 40C are treated as projection target candidates. After grouping, the multiple real objects 40A to 40C are grouped according to a gesture operation performed by the user's finger 60. The gesture operation is an operation of tracing, in one stroke, a perimeter 80 around the multiple real objects 40A to 40B that the user wants to group, for example.

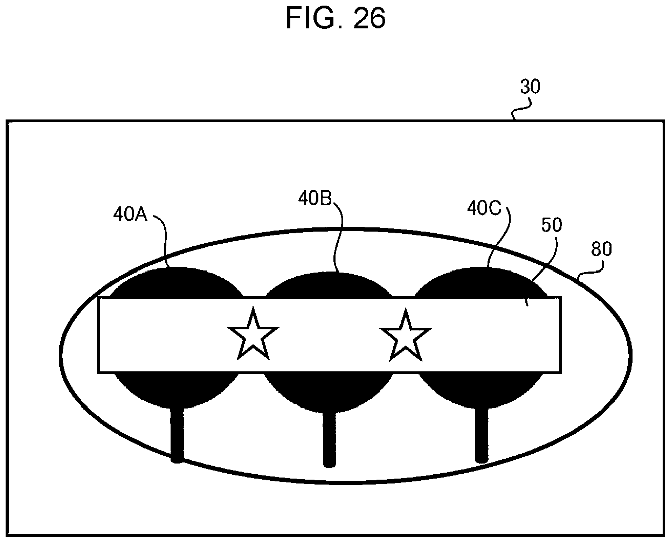

Fig. 26 is a diagram illustrating an example of the image data 50 projected onto the multiple grouped real objects 40A to 40C.

As illustrated in Fig. 26, the image data 50 selected by the user is projected onto the multiple grouped real objects 40A to 40C. In this case, too, the user is able to edit the image data 50 being projected.

In this way, according to the present exemplary embodiment, multiple real objects are grouped and handled as a single projection target. Consequently, it is possible to project image data onto the single projection target obtained by grouping multiple real objects.

### [Fifth exemplary embodiment]

The fifth exemplary embodiment describes a configuration in which a projected image automatically tracks the projection target when the real object set as the projection target is moved or rotated.

The CPU 11 of the information processing device according to the present exemplary embodiment (hereinafter referred to as the "information processing device 10D") functions as an acquisition unit 11A, an object detection unit 11B, an operation detection unit 11C, a selection unit 11D, a projection control unit 11E, a print control unit 11F, and a payment unit 11G, similarly to the information processing device 10 described in the first exemplary embodiment above. Hereinafter, the points where the information processing device 10D according to the present exemplary embodiment differs from the information processing device 10 according to the first exemplary embodiment above will be described.

If a first real object among multiple real objects 40 is moved or rotated while the image data 50 is being projected onto the first real object, the projection control unit 11E moves or rotates the image data 50 to track the first real object.

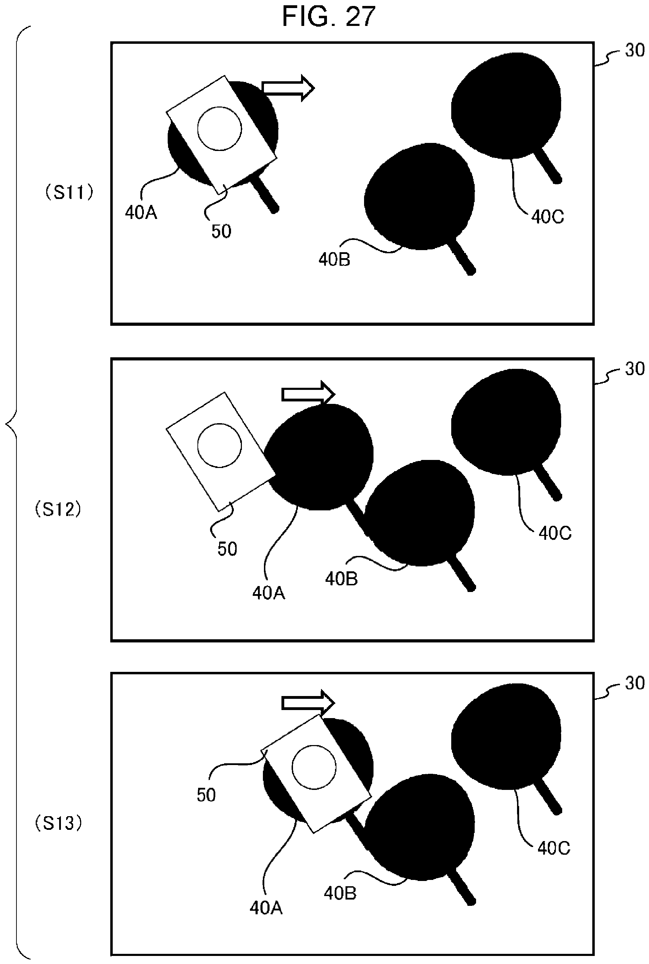

Fig. 27 is a diagram accompanying a description of a process for automatic tracking by the image data 50 according to the fifth exemplary embodiment. The example in Fig. 27 illustrates a case where the real object 40 set as the projection target is moved.

In (S11) of Fig. 27, the image data 50 selected by the user is projected onto the real object 40A as an example of the first real object.

In (S12), the user moves the real object 40A in the direction of the arrow (to the right in the example of Fig. 27) .

In (S13), the image data 50 moves to follow the real object 40A.

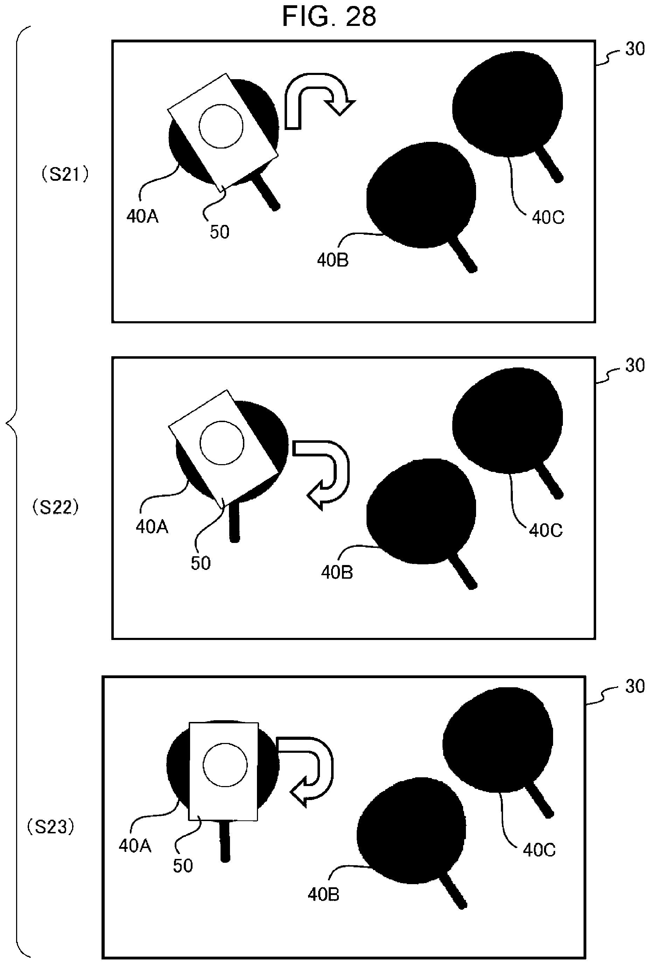

Fig. 28 is a diagram accompanying a description of another process for automatic tracking by the image data 50 according to the fifth exemplary embodiment. The example in Fig. 28 illustrates a case where the real object 40 set as the projection target is rotated.

In (S21) of Fig. 28, the image data 50 selected by the user is projected onto the real object 40A as an example of the first real object.

In (S22), the user rotates the real object 40A in the direction of the arrow (clockwise in the example of Fig. 28) .

In (S23), the image data 50 rotates to follow the real object 40A.

The projection control unit 11E may also disable tracking if the user performs a predetermined operation. Note that the predetermined operation may be an operation in which the user raises both hands over the stage 30 for a fixed time, for example. In this case, the projection control unit 11E causes the background color projected onto the stage 30 when tracking is enabled to be different from the background color projected onto the stage 30 when tracking is disabled. The background color herein refers to the color of a background portion other than an image portion in the entire projected data.

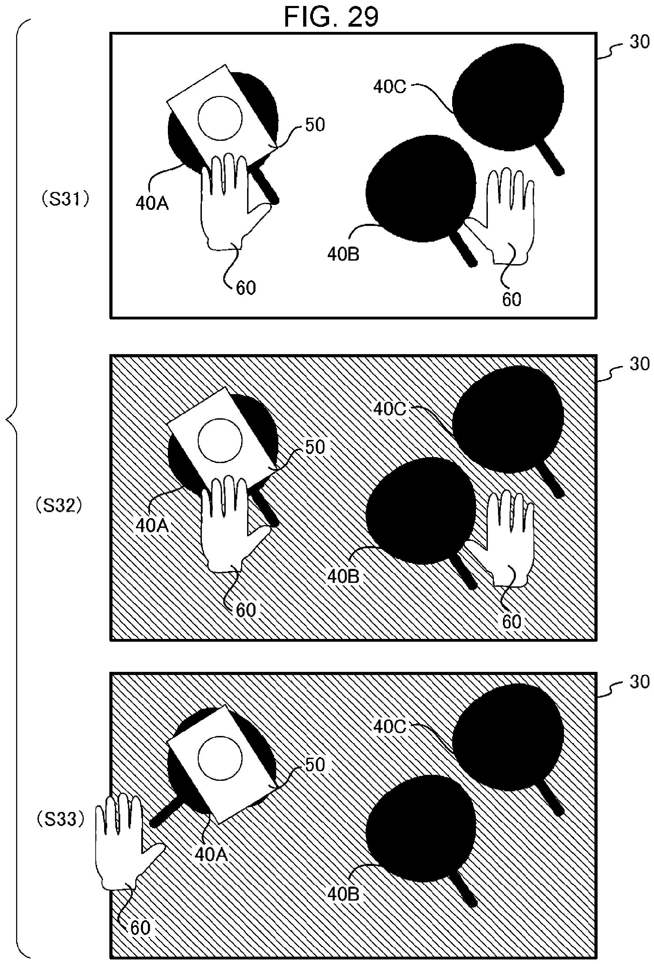

Fig. 29 is a diagram accompanying a description of a process for disabling the automatic tracking by the image data 50 according to the fifth exemplary embodiment.

In (S31) of Fig. 29, a gesture operation in which the user's hands 60 are raised over the stage 30 for a fixed time is detected while the image data 50 selected by the user is being projected onto the real object 40A.

In (S32), the automatic tracking by the image data 50 is disabled and the background color projected onto the stage 30 is changed to clearly indicate that automatic tracking is disabled. In the example of Fig. 29, the difference in color is represented as a difference in shading. Note that if the gesture operation in which the user's hands 60 are raised over the stage 30 for a fixed time is detected again while in the above state, automatic tracking is enabled and the projected background color is reverted.

In (S33), if automatic tracking by the image data 50 is disabled, the image data 50 does not track the real object 40A even if the real object 40A is moved or rotated by the user's hand 60.

In this way, according to the present exemplary embodiment, the projected image automatically tracks the projection target when the real object set as the projection target is moved or rotated. Consequently, it is also possible to accommodate situations in which the user makes an adjustment by moving the real object rather than moving the projected image.

### [Sixth exemplary embodiment]

The sixth exemplary embodiment describes a configuration in which the projection of an edited image list screen is controlled.

The CPU 11 of the information processing device according to the present exemplary embodiment (hereinafter referred to as the "information processing device 10E") functions as an acquisition unit 11A, an object detection unit 11B, an operation detection unit 11C, a selection unit 11D, a projection control unit 11E, a print control unit 11F, and a payment unit 11G, similarly to the information processing device 10 described in the first exemplary embodiment above. Hereinafter, the points where the information processing device 10E according to the present exemplary embodiment differs from the information processing device 10 according to the first exemplary embodiment above will be described.

The projection control unit 11E controls the projection, onto the stage 30, of an edited image list screen, that is, a list of edited image data obtained in the past. In this case, the projection control unit 11E treats edited image data selected from the edited image list screen as the image data to be projected. For example, as illustrated in Fig. 10A described above, the edited image list screen is projected in response to a gesture operation in which the user's hand 60 moves from the top edge of the stage 30 toward the bottom edge.

Also, if a predetermined user operation is received with respect to edited image data selected from the edited image list screen, the projection control unit 11E may also control the projection of unedited image data corresponding to the edited image data.

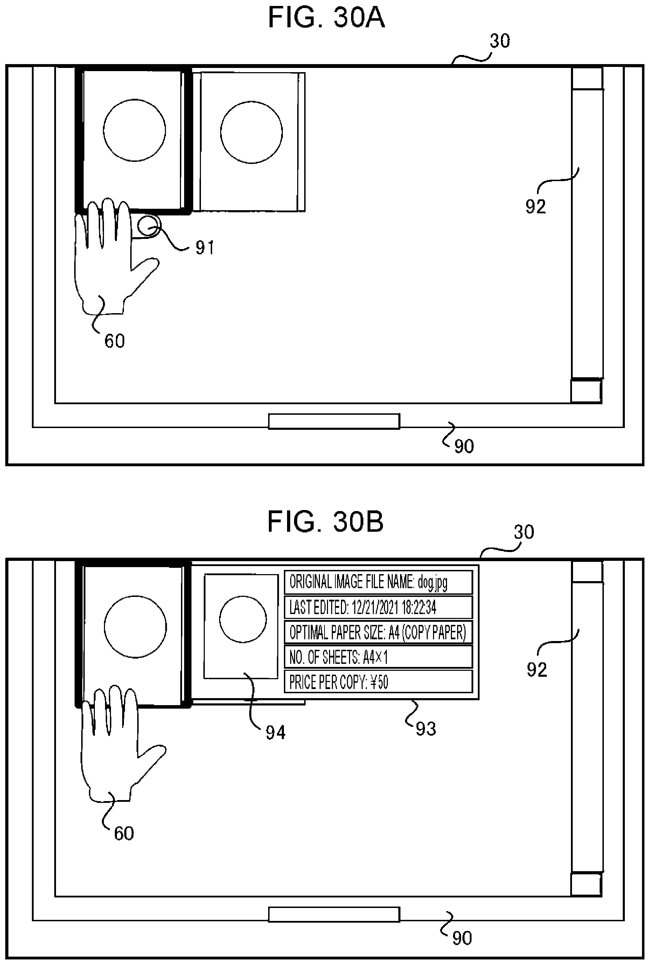

Figs. 30A and 30B are diagrams accompanying a description of an edited image list screen 90 according to the sixth exemplary embodiment.

As illustrated in Fig. 30A, a list of unselected, edited image data is displayed on the edited image list screen 90 projected onto the stage 30. If a touch operation by the user's hand 60 or an operation in which the user's hand 60 remains raised for a fixed time is performed with respect to the edited image data that the user wants to select, the edited image data is set as the selected image. The selected image is clearly indicated (in other words, emphasized) by changing the color or thickness of a rectangular frame around the selected image, for example. The user may also toggle an image between selected and deselected states by performing a slide operation on a toggle button 91. Also, if there is a large amount of edited image data, an image may be selected by performing a slide operation on a scrollbar 92.

As illustrated in Fig. 30B, if a touch operation (such as a double tap) by the user's hand 60 or an operation (such as long press) in which the user's hand 60 remains raised for a fixed time is performed with respect to the selected image selected as above, detailed data 93 about the selected image is displayed. The detailed data 93 includes unedited image data corresponding to the selected image.

In this way, according to the present exemplary embodiment, an edited image list screen is projected, thereby enabling the user to select edited image data as the image data to be projected.

### [Seventh exemplary embodiment]

The seventh exemplary embodiment describes a configuration in which the projection of a projected image selection screen is controlled.

The CPU 11 of the information processing device according to the present exemplary embodiment (hereinafter referred to as the "information processing device 10F") functions as an acquisition unit 11A, an object detection unit 11B, an operation detection unit 11C, a selection unit 11D, a projection control unit 11E, a print control unit 11F, and a payment unit 11G, similarly to the information processing device 10 described in the first exemplary embodiment above. Hereinafter, the points where the information processing device 10F according to the present exemplary embodiment differs from the information processing device 10 according to the first exemplary embodiment above will be described.

The projection control unit 11E controls the projection, onto the stage 30, of a projected image selection screen including an image list, that is, a list of image data containing the image data currently being projected. When adding image data to be projected, the projection control unit 11E adds image data selected from the projected image selection screen as the image data to be projected. For example, as illustrated in Fig. 10C described above, the projected image selection screen is projected in response to a gesture operation in which the user's hand 60 moves from the bottom edge of the stage 30 toward the top edge.

Also, if a predetermined user operation is received with respect to projected image data included on the projected image selection screen, the projection control unit 11E may also exclude currently projected image data from projection.

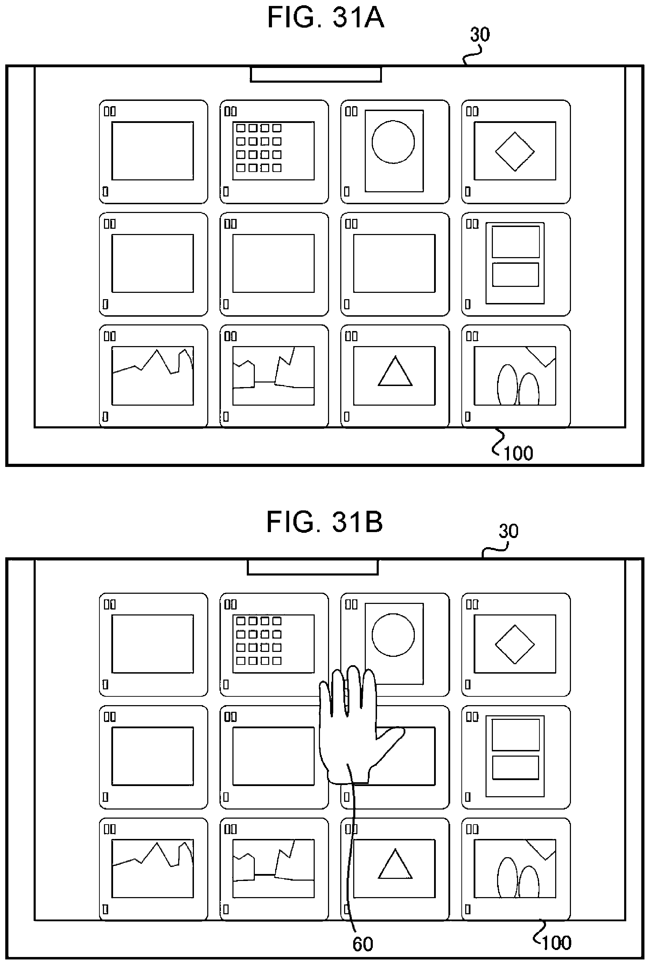

Figs. 31A, 31B, 32A, 32B, and 33 are diagrams accompanying a description of a projected image selection screen 100 according to the seventh exemplary embodiment.

As illustrated in Fig. 31A, a list of image data containing the currently projected (selected) image data is displayed on the projected image selection screen 100 projected onto the stage 30. The projected image selection screen 100 is a screen for adding new image data to be projected and for excluding, or in other words removing, currently projected image data from projection.

As illustrated in Fig. 31B, if the user performs a touch operation with the user's hand 60 or an operation in which the user's hand 60 remains raised for a fixed time with respect to unselected image data, the image data is set as the selected image. The selected image is clearly indicated (in other words, emphasized) by changing the color or thickness of a rectangular frame around the selected image, for example.

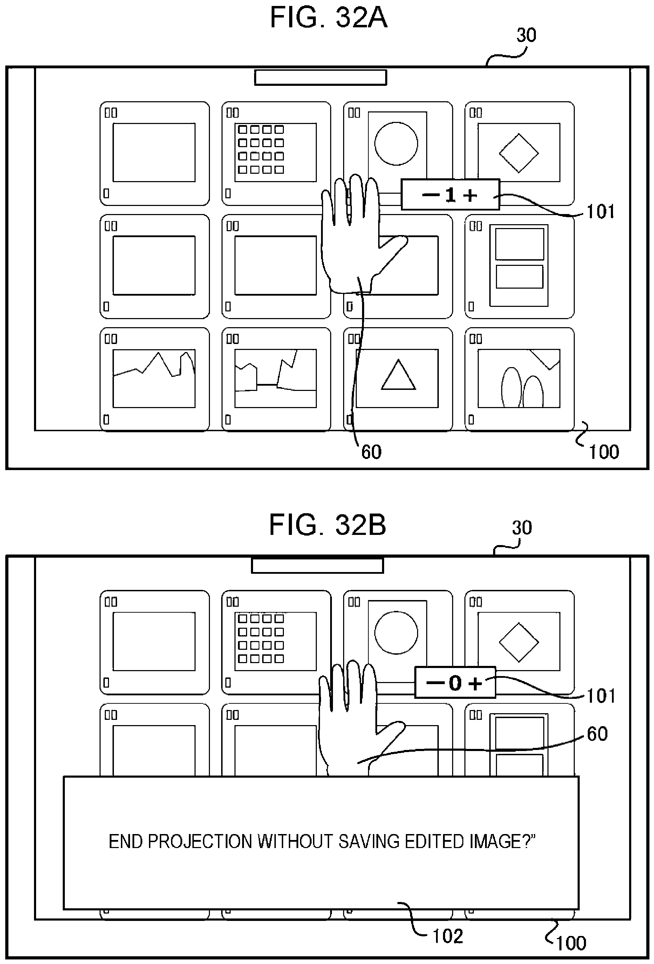

As illustrated in Fig. 32A, if the user performs a touch operation with the user's hand 60 or an operation in which the user's hand 60 remains raised for a fixed time with respect to currently projected (selected) image data, a display count increment-decrement button 101 is displayed. The display count increment-decrement button 101 is a button operated to increase or decrease the number of display instances of the image data currently being projected (edited). In the example of Fig. 32A, the display count is "1", and therefore if a touch operation is performed on "-", the display count is decremented to "0", whereas if a touch operation is performed on "+", the display count is incremented to "2".

As illustrated in Fig. 32B, if the display count of the display count increment-decrement button 101 is changed to "0", the image data currently being projected (edited) is excluded, or in other words removed, from projection. In this case, for example, it is desirable to display a message 102 asking "End projection without saving edited image?" to prompt the user for confirmation.

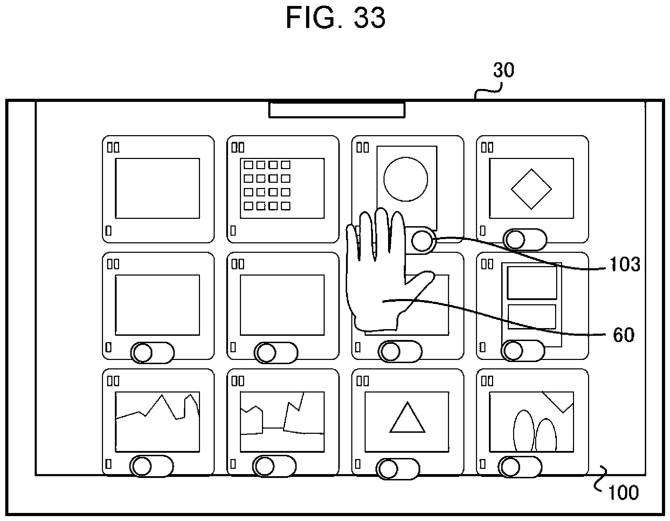

As illustrated in Fig. 33, if the user performs a touch operation with the user's hand 60 or an operation in which the user's hand 60 remains raised for a fixed time with respect to unselected image data, the image data is set as the selected image. The selected image is clearly indicated (in other words, emphasized) by changing the color or thickness of a rectangular frame around the selected image, for example. In the example of Fig. 33, unlike the example of Fig. 31B described above, the user may also toggle an image between selected and deselected states by performing a slide operation on a toggle button 103.

In this way, according to the present exemplary embodiment, a projected image selection screen is projected, thereby enabling the user to add or remove image data to be projected.

### [Eighth exemplary embodiment]

The eighth exemplary embodiment describes a configuration in which the projection of a projected object list screen is controlled.

The CPU 11 of the information processing device according to the present exemplary embodiment (hereinafter referred to as the "information processing device 10G") functions as an acquisition unit 11A, an object detection unit 11B, an operation detection unit 11C, a selection unit 11D, a projection control unit 11E, a print control unit 11F, and a payment unit 11G, similarly to the information processing device 10 described in the first exemplary embodiment above. Hereinafter, the points where the information processing device 10G according to the present exemplary embodiment differs from the information processing device 10 according to the first exemplary embodiment above will be described.

The projection control unit 11E projects a projected object list screen including an image list, that is, a list of image data, onto a region of the stage 30 other than the region where multiple real objects 40 are placed, and also controls the projection of the image data included on the image list onto the region of the stage 30 where the multiple real objects 40 are placed. For example, as illustrated in Fig. 10D described above, the projected object list screen is projected in response to a gesture operation in which the user's hand 60 moves from the left edge of the stage 30 toward the right edge.

The projection control unit 11E may also be configured such that when image data is selected from the projected object list screen, the appearance is changed for the image data corresponding to the selected image data from among the image data being projected in the region where the multiple real objects 40 are placed on the stage 30.

The projection control unit 11E may also be configured such that when multiple pieces of image data are selected from the projected object list screen, the multiple pieces of image data are grouped together as a single piece of projected image data.

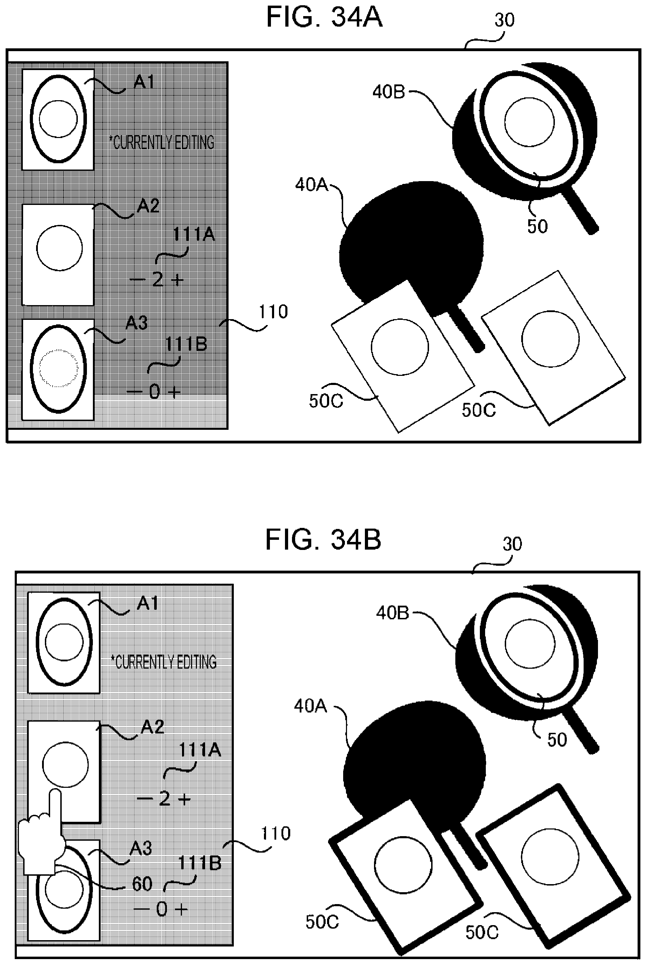

Figs. 34A, 34B, 35A, 35B, 36A, 36B, 37A, 37B, and 38 are diagrams accompanying a description of a projected object list screen 110 according to the eighth exemplary embodiment.

As illustrated in Fig. 34A, the projected object list screen 110 is projected onto a region other than the region where multiple real objects 40A and 40B are placed on the stage 30. On the projected object list screen 110, the projected image data corresponding to image data A1 included among image data A1 to A3 is indicated as currently being edited. Also, display count increment-decrement buttons 111A and 111B are associated with the image data A2 and A3, respectively. Note that a display count increment-decrement button is not displayed with respect to the image currently being edited, and the indication of the image data currently being edited is displayed. A display count increment-decrement button may also be displayed with respect to a projected image corresponding to an image that has been added to a print job. In the display count increment-decrement button 111A, the display count is set to "2", and in the display count increment-decrement button 111B, the display count is set to "0". If the display count is "0", the image data corresponding to the image data A3 is not projected. However, the image data corresponding to the image data A3 is merely not projected, and is not removed. In this case, one piece of image data 50 corresponding to the image data A1 and two pieces of image data 50C corresponding to the image data A2 are projected onto the region where the multiple real objects 40A and 40B are placed on the stage 30, whereas image data corresponding to the image data A3 is not projected. The image data 50 currently being edited is projected onto the real object 40B.

As illustrated in Fig. 34B, if the user's finger 60 performs a touch operation on the image data A2 from the projected object list screen 110, the appearance is changed for the image data 50C corresponding to the touched image data A2 from among the image data 50 and 50C being projected onto the region where the multiple real objects 40A and 40B are placed on the stage 30. The image data 50C is clearly indicated (in other words, emphasized) by changing the color or thickness of a rectangular frame around the selected images, for example.

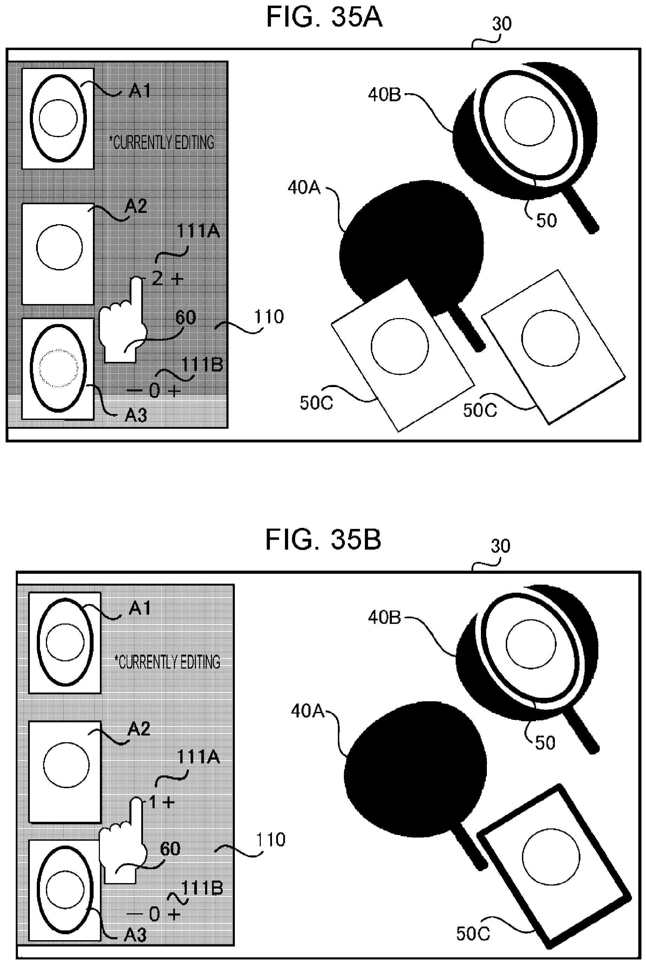

As illustrated in Fig. 35A, if the user's finger 60 performs a touch operation on "-" in the display count increment-decrement button 111A, the display count of the image data 50C is set to "1", and as illustrated in Fig. 35B, the number of pieces of the image data 50C being displayed is changed. In other words, the user is able to increase or decrease the display count by operating "-" or "+" in the display count increment-decrement button 111A. The number of pieces of the image data 50C being displayed is changed according to the increase or decrease in the display count.

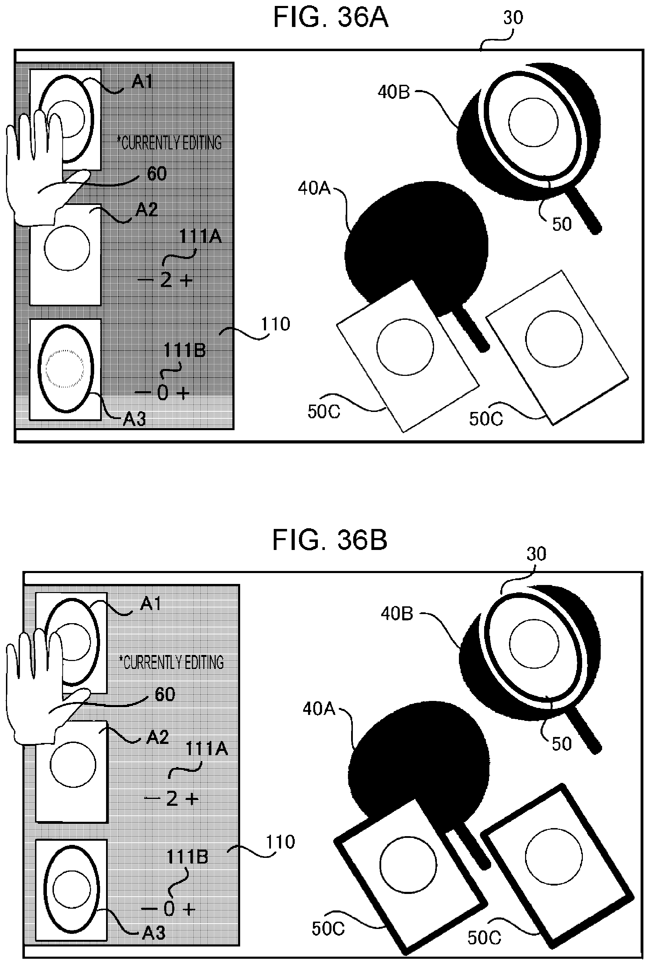

In the case of grouping multiple pieces of projected image data into one, as illustrated in Fig. 36A, if the user performs a touch operation (such as a double tap) with the user's hand 60 or an operation in which the user's hand 60 remains raised for a fixed time with respect to unselected image data included on the projected object list screen 110, the image data is set as the selected image, as illustrated in Fig. 36B. The selected image is clearly indicated (in other words, emphasized) by changing the color or thickness of a rectangular frame around the selected image, for example.

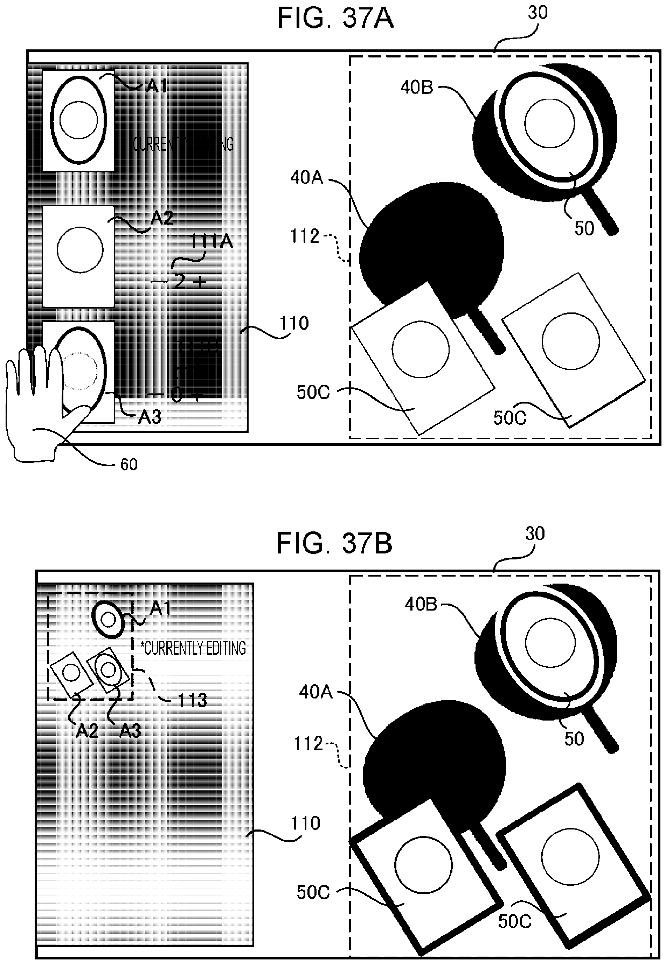

As illustrated in Fig. 37A, if the user performs selection operations on all of the desired image data A1 to A3 to be grouped on the projected object list screen 110 and the image data A1 to A3 are set as the selected images, a frame 112 enclosing the corresponding projected image data 50 and 50C is projected. The frame 112 indicates that the projected image data 50 and 50C are grouped.

As illustrated in Fig. 37B, a frame 113 indicating that the image data A1 to A3 are grouped is displayed on the projected object list screen 110 in accordance with the grouping of the projected image data 50 and 50C.

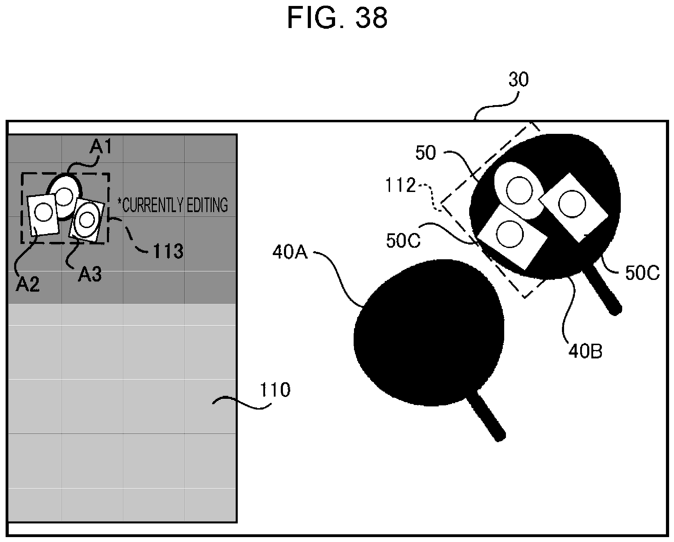

As illustrated in Fig. 38, if the user performs an operation for moving the frame 112 to the real object 40B, the image data 50 and 50C enclosed in the frame 112 are projected onto the real object 40B. In correspondence with the above projection, the size of the frame 113 containing the image data A1 to A3 is changed on the projected object list screen 110.

In this way, according to the present exemplary embodiment, a projected object list screen is projected, thereby enabling the user to select a real object to set as the projection target while looking at the image data being projected.

### [Ninth exemplary embodiment]

The ninth exemplary embodiment describes a configuration in which the projection of a print execution screen and a payment screen is controlled.

The CPU 11 of the information processing device according to the present exemplary embodiment (hereinafter referred to as the "information processing device 10H") functions as an acquisition unit 11A, an object detection unit 11B, an operation detection unit 11C, a selection unit 11D, a projection control unit 11E, a print control unit 11F, and a payment unit 11G, similarly to the information processing device 10 described in the first exemplary embodiment above. Hereinafter, the points where the information processing device 10H according to the present exemplary embodiment differs from the information processing device 10 according to the first exemplary embodiment above will be described.

The projection control unit 11E controls the projection, onto the stage 30, of a print execution screen including an image list, that is, a list of image data to be printed. For example, as illustrated in Fig. 10B described above, the print execution screen is projected in response to a gesture operation in which the user's hand 60 moves from the right edge of the stage 30 toward the left edge.

The projection control unit 11E may also control the projection, onto the stage 30, of a payment screen including an image list, that is, a list of image data to be printed.

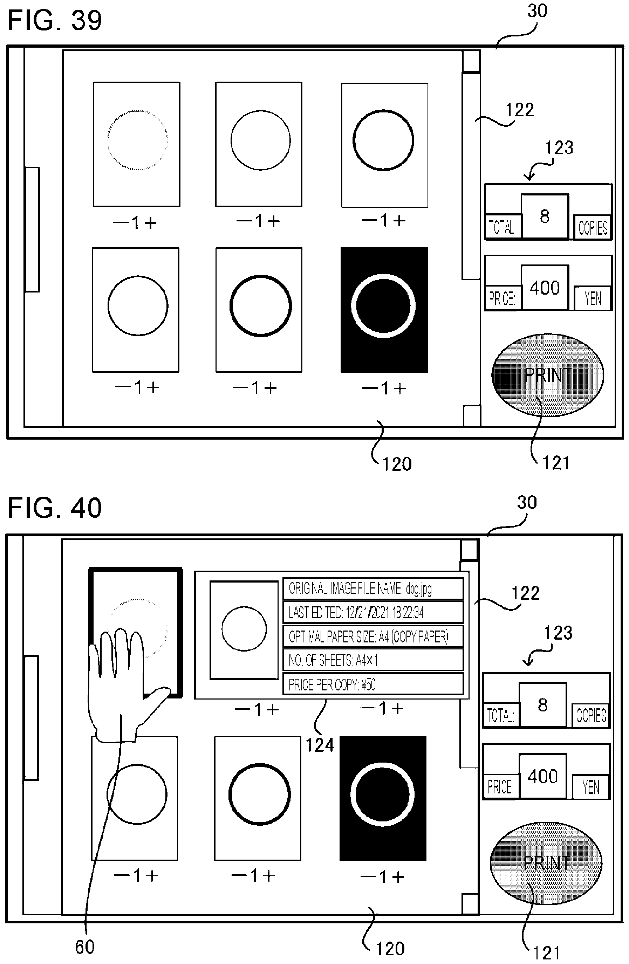

Figs. 39 to 41 are diagrams accompanying a description of a print execution screen 120 according to the ninth exemplary embodiment.

As illustrated in Fig. 39, a list of image data to be printed is displayed on the print execution screen 120 projected onto the stage 30. The print execution screen 120 includes a print button 121, a scrollbar 122, and a price display field 123. Note that a print count increment-decrement button "- 1 +" is associated with each piece of image data, enabling the user to adjust the number of copies to print by operating "-" or "+". If the user selects desired image data to print, a printing fee is displayed in the price display field 123 according to print conditions such as the designated paper size and the number of copies. If there is a large amount of image data, the user is able to select image data by performing a scrolling operation on the scrollbar 122. The price in the price display field 123 is changed depending on the number of copies. If the user wants to change the print conditions, the user may switch to the screen illustrated in Fig. 40, for example.

As illustrated in Fig. 40, if a touch operation (such as a double tap) by the user's hand 60 or an operation (such as long press) in which the user's hand 60 remains raised for a fixed time is performed with respect to the selected image selected as above, detailed data 124 about the print conditions of the selected image is displayed. The detailed data 124 includes the print conditions of the selected image and receives changes to conditions such as the paper size and the number of copies. If the user operates the print button 121 after setting the desired print conditions, the display is switched to the payment screen described later.

The information processing device 10H according to the present exemplary embodiment automatically selects an optimal paper size when the user prints edited image data. On the other hand, if the user has a desired paper size, the following two cases are conceivable.
(1) If the optimal paper size is equal to or smaller than the user's desired paper size, the image data is printed on a single sheet of paper.
(2) If the optimal paper size is larger than the user's desired paper size, the image data is printed on multiple sheets of paper.

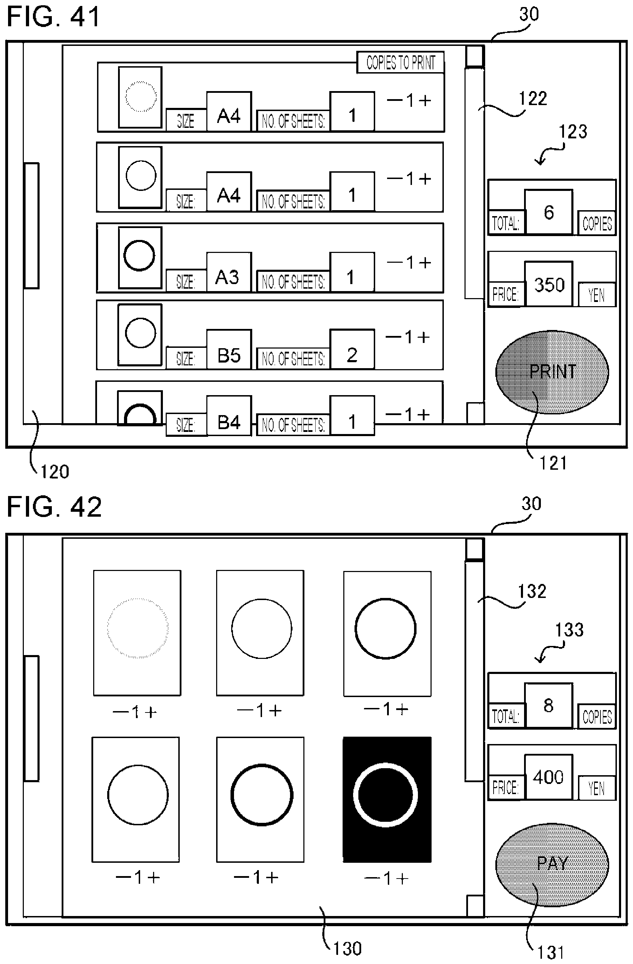

Consequently, for example, a "number of sheets" item may also be displayed, as illustrated on the print execution screen 120 in Fig. 41. For example, the situation in which the optimal paper size is "A4" and the user's desired paper size is "B5" corresponds to the above case (2), and therefore the "number of sheets" is "2". Note that in the example in Fig. 41, the printing fee is calculated at 100 yen/sheet for A3 size and 50 yen/sheet for other paper sizes. Also, when the scale of an image is changed during editing while projecting the image, it is desirable to project the optimal paper size dynamically according to the current projected image.

Figs. 42 to 44 are diagrams accompanying a description of a payment screen 130 according to the ninth exemplary embodiment.

As illustrated in Fig. 42, the payment screen 130 is projected in response to the user operating the print button 121 illustrated in Fig. 39 described above, for example. The payment method may be any of various types of electronic payment using a smartphone, IC card, or the like, and may also be cash payment using a coin vender or the like, for example. The payment screen 130 includes a pay button 131, a scrollbar 132, and a price display field 133. If there is a large amount of image data, the user is able to review image data by performing a scrolling operation on the scrollbar 132. The price in the price display field 133 is changed depending on the number of copies. The user operates the pay button 131, and when payment is completed, printing is executed.

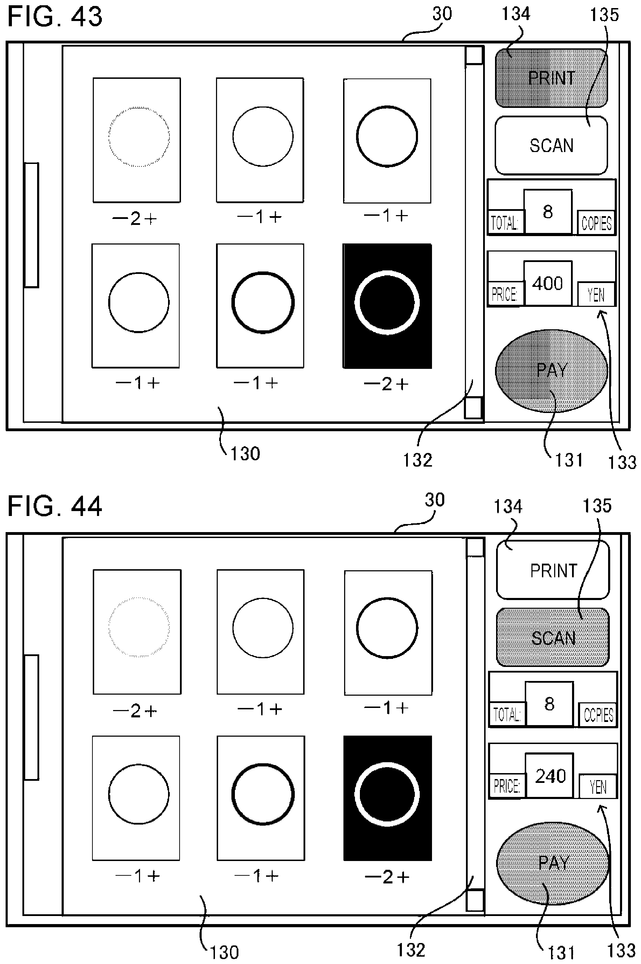

As illustrated in Figs. 43 and 44, printing and a different service such as scanning may also be provided on the payment screen 130. The example in Fig. 43 illustrates a state in which a print option 134 is selected, while the example in Fig. 44 illustrates a state in which a scan option 135 is selected. As illustrated in the examples in Figs. 43 and 44, the price may be different depending on the content of the service. Specifically, the price is "400 yen" in the example of the print option 134 in Fig. 43 and \ yen" in the example of the scan option 135 in Fig. 44.

In this way, according to the present exemplary embodiment, a print execution screen and a payment screen are projected, thereby enabling the user to print and pay for image data.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

The above describes examples of an information processing device according to the exemplary embodiments. The exemplary embodiments may also be configured as a program that causes a computer to execute the functions of each component provided in the information processing device. The exemplary embodiments may also be configured as a computer-readable storage medium storing the program.

Otherwise, the configuration of the information processing device described in the exemplary embodiments above is an example, and may be modified according to circumstances within a range that does not depart from the gist.

Also, the process flow of the program described in the exemplary embodiments above is an example, and unnecessary steps may be removed, new steps may be added, or the processing sequence may be rearranged within a range that does not depart from the gist.

Also, the exemplary embodiments above describe a case in which the process according to the exemplary embodiments is achieved by a software configuration using a computer by executing a program, but the configuration is not limited thereto. The exemplary embodiments may also be achieved by a hardware configuration or by a combination of a hardware configuration and a software configuration, for example.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

## Claims

1. An information processing device comprising:
a processor configured to:
acquire image data;
detect a position on a predetermined stage of each of a plurality of real objects placed on the stage, the plurality of real objects being candidates onto which the image data is to be projected;
receive a selection of a real object as a projection target from among the plurality of real objects according to content of an operation performed by a user on the plurality of real objects and the position of each of the plurality of real objects on the stage; and
cause the image data to be printed after projecting the image data onto the selected real object according to the position of the selected real object on the stage.

2. The information processing device according to Claim 1, wherein:
the processor is configured to detect a size of each of the plurality of real objects; and
if the image data is being projected onto a first real object among the plurality of real objects and the selection of a second real object different from the first real object is received according to a user operation, the processor is configured to cause the image data to be projected onto the second real object such that a size of the image data is adjusted to match the size of the second real object.

3. The information processing device according to Claim 1, wherein:
in a case where previously edited image data similar to the image data exists and a real object similar to a real object previously associated with the edited image data exists among the plurality of real objects, the processor is configured to cause at least one of the image data or the edited image data to be projected onto the similar real object among the plurality of real objects.

4. The information processing device according to Claim 3, wherein:
the processor is configured to detect a shape of each of the plurality of real objects; and
the processor is configured to determine, on a basis of a result of the shape detection, whether a real object having a shape similar to the real object previously associated with the edited image data exists among the plurality of real objects.

5. The information processing device according to Claim 3 or 4, wherein:
if a plurality of the edited image data exists, the processor is configured to cause the plurality of edited image data to be projected together with the image data or instead of the image data.

6. The information processing device according to Claim 1, wherein:
the processor is configured to group and handle the plurality of real objects as a single projection target according to a user operation; and
the processor is configured to cause the image data to be projected onto the single projection target obtained by the grouping.

7. The information processing device according to Claim 1, wherein:
if a first real object among the plurality of real objects is moved or rotated while the image data is being projected onto the first real object, the processor is configured to move or rotate the image data to track the first real object.

8. The information processing device according to Claim 7, wherein:
the processor is configured to disable the tracking if the user performs a predetermined operation.

9. The information processing device according to Claim 8, wherein:
the processor is configured to cause a background color projected onto the stage when the tracking is enabled to be different from a background color projected onto the stage when the tracking is disabled.

10. The information processing device according to any one of Claims 1 to 9, wherein:
the processor is configured to cause an edited image list, that is, a list of edited image data obtained in the past, to be projected onto the stage; and
the processor is configured to treat edited image data selected from the edited image list as image data to be projected.

11. The information processing device according to any one of Claims 1 to 9, wherein:
the processor is configured to:
cause an image list, that is, a list of image data, to be projected onto a region other than a region where the plurality of real objects are placed on the stage; and
cause image data included in the image list to be projected onto the region where the plurality of real objects are placed on the stage.

12. The information processing device according to Claim 11, wherein:
in a case where image data is selected from the image list, the processor is configured to change the appearance of the image data corresponding to the selected image data among the image data being projected in the region where the plurality of real objects are placed on the stage.

13. The information processing device according to Claim 12, wherein:
in a case where a plurality of image data is selected from the image list, the processor is configured to group the plurality of image data together as a single piece of projected image data.

14. An information processing method comprising:
acquiring image data;
detecting a position on a predetermined stage of each of a plurality of real objects placed on the stage, the plurality of real objects being candidates onto which the image data is to be projected;
receiving a selection of a real object as a projection target from among the plurality of real objects according to content of an operation performed by a user on the plurality of real objects and the position of each of the plurality of real objects on the stage; and
causing the image data to be printed after projecting the image data onto the selected real object according to the position of the selected real object on the stage.

15. A program causing a computer to execute a process comprising:
acquiring image data;
detecting a position on a predetermined stage of each of a plurality of real objects placed on the stage, the plurality of real objects being candidates onto which the image data is to be projected;
receiving a selection of a real object as a projection target from among the plurality of real objects according to content of an operation performed by a user on the plurality of real objects and the position of each of the plurality of real objects on the stage; and
causing the image data to be printed after projecting the image data onto the selected real object according to the position of the selected real object on the stage.
